# EUROPÄISCHE PATENTSCHRIFT

(11) **EP 3 262 107 B1**
(45) Veröffentlichungstag und Bekanntmachung des Hinweises auf die Patenterteilung: **22.12.2021**
(21) Anmeldenummer: 16718599.0
(22) Anmeldetag: 25.02.2016
(51) Int. Cl.: C08K 5/00, C08L 1/10, C08K 13/00, C08K 5/527, C09K 11/06, C08J 5/18, C08K 5/3492, C08K 5/521, C08L 1/12, C08K 5/1545, C08K 5/3437, C08K 5/3475

(54) **MULTIFUNKTIONALE OPTISCH HOCHTRANSPARENTE FOLIEN SOWIE EIN VERFAHREN ZU DEREN HERSTELLUNG**
MULTIFUNCTIONAL OPTICAL HIGHLY TRANSPARENT FILMS AND METHOD FOR PRODUCING THE SAME
FILMS MULTIFONCTIONNELS OPTIQUES HAUTEMENT TRANSPARENTS ET PROCEDE DE PRODUCTION DE CELUI-CI

(30) Priorität: 27.02.2015 DE 102015003005
(43) Veröffentlichungstag der Anmeldung: 03.01.2018
(73) Patentinhaber: Island Polymer Industries GmbH, 06766 Bitterfeld-Wolfen (DE)
(72) Erfinder: PARIZAT, Amnon, Old Westbury, New York 11568 (US); HÄRTER, Gernod, 06766 Bitterfeld-Wolfen (DE); BÖTTCHER, Silvio, 04157 Leipzig (DE); PILS, Anne, 04509 Delitzsch (DE)
(74) Vertreter: Fischer, Volker
(86) Internationale Anmeldenummer: PCT/DE2016/000080
(87) Internationale Veröffentlichungsnummer: WO 2016/134688

(56) Entgegenhaltungen:
- JP-A- 2002 144 357
- JP-A- 2003 161 807
- JP-A- 2005 104 149
- US-A1- 2006 069 192
- US-A1- 2008 254 236

## Beschreibung

Die Erfindung betrifft multifunktionale optisch hochtransparente Folien, das heißt optisch und anwendungstechnisch multifunktionale Folien, auf Basis von Cellulosederivaten, insbesondere Triacetatcellulose, die als Schutzfolien gegenüber der Einwirkung von Sonnenlicht eingesetzt werden können. Des Weiteren betrifft die Erfindung ein Verfahren zu deren Herstellung.

Seit mehr als 100 Jahren werden Filmfolien auf der Basis von Cellulosederivaten hergestellt, die als Trägermaterial für fotografisch aktive Schichten, als Trägermaterial für Membranen oder vor allem in den vergangenen 10 Jahren auch als optisch inertes Schutzmaterial für Flüssigkristallanzeige (LCD)-Kristall-Schichten und polarisierende Schichten in LCD-Bildschirmen eingesetzt werden. Als bevorzugte Materialien werden hier Celluloseester wie zum Beispiel Triacetatcellulose (TAC), Diacetatcellulose (DAC), Celluloseacetobutyrat (CAB) oder Celluloseacetopropionat (CAP) oder Kombinationen dieser Cellulosederivate eingesetzt.

Zirka seit Beginn des zweiten Jahrtausends werden Filme auf der Basis von Triacetatcellulose auch als Bestandteil von Schutzfolien, Fensterfolien, Sonnenbrillen, Skibrillen, Schutzbrillen und Spezialbrillen verwendet. Üblicherweise werden hier verschiedene Filme unterschiedlicher Dicke und Funktionalität miteinander verklebt, wobei der typische Aufbau wie folgt aussieht:
- Hardcoat beschichtete Lage (Außenseite)
- UV-400 Schutzfilm
- TAC-Lage, eventuell gefärbt
- Polarisationsfilter (PVA-Schicht), eventuell gefärbt
- TAC-Schicht, evtl. gefärbt
- Hardcoat beschichtete Lage (Innenseite).

Die hierzu verwendeten TAC-Folien werden in einem vergleichsweise aufwändigen Gießverfahren hergestellt, welches im Wesentlichen auf den Prozessschritten Lösen, Filtrieren, Entgasen, Auftragen und Trocknen basiert, wobei jeder Folienhersteller über ein spezifisches, individuell entwickeltes Herstellungsverfahren verfügt.

Durch Zugabe von Additiven kann hierbei das Produkt in seinen Eigenschaften, wie zum Beispiel UV-Beständigkeit, thermische Beständigkeit, Dehnungsverhalten, Transmission, Absorptionsverhalten, Blockingverhalten etc., entsprechend der geforderten Kundenspezifikationen verändert beziehungsweise optimiert werden. Entsprechend dieser Eigenschaften werden TAC-Folien als UV-Schutzfilm, gehärteter Film, farbiger Film, Retardation-Film, PVA-Schutzfilm, thermisch belastbarer Zwischenlagefilm, Schwarzweiß-Unterlagefilm oder Farb-Unterlagefilm angeboten. Für die Fertigung der Endprodukte, wie z.B. LCD-Bildschirme oder Sonnenschutzbrillen, ist stets die Verklebung unterschiedlicher funktionaler Filme erforderlich, um ein bestmögliches Eigenschaftsprofil zu erhalten. Der überwiegende Anteil der weltweit hergestellten TAC-Folien wird nicht als Einzellage direkt in einem Endprodukt eingesetzt, ausgenommen Unterlagefolien für Fotofilme, sondern in der Regel in einem mehrschichtigen Aufbau meist zu einem Endprodukt verarbeitet. Ursache hierfür ist zum einen die Tatsache, dass TAC-Folien mit Dicken oberhalb 300 µm in der vom Markt geforderten Qualität kaum beziehungsweise nur sehr ineffizient herstellbar sind, und zum anderen, dass die verschiedenen funktionalen optischen Eigenschaften des Endproduktes nur durch Kombination unabhängig voneinander hergestellter Einzellagen realisiert werden können.

Die Herstellung multifunktionaler Sonnenlicht-Schutzfolien auf der Basis von Cellulosetriacetat mit den geforderten Eigenschaften höchstmögliche Transmission, niedriger Haze-Wert ≤ 1 %, 90-99%-ige UV-Blockung, dauerhafte UV-Beständigkeit, definierte Farbe, exzellente Homogenität der Farb- und UV-Absorberverteilung, mechanische und thermische Stabilität, Transport- und Lagerstabilität, Verarbeitbarkeit bei Temperaturen ≥ 120°C ohne Eigenschaftsbeeinträchtigung, Saponifizierbarkeit ohne Eigenschaftsbeeinträchtigung und der definierten Absorption retinagefährdender und/oder retinazapfenirritierender Lichtbestandteile ist bislang nicht erfolgt.

Bisher konnte ein definiertes Eigenschaftsprofil eines TAC-Films nur im Rahmen von zwei bis drei Additiven gewährleistet werden. Eine Kombination von mehreren Additiven und damit verbundenen verschiedenen Eigenschaften für die Folie führt zu unkontrollierbaren negativen Wechselwirkungen, die Probleme bei der Produktion des Films oder eine Beeinträchtigung der Qualität des Films sowie Beeinträchtigungen im Weiterverarbeitungsprozess hervorrufen.

Als Beispiel soll hier die zur Verbesserung der mechanischen Eigenschaften (insbesondere der Dehnung) erforderliche Zugabe von Weichmachern sowie die Zugabe von UV-Licht absorbierenden Absorbern genannt werden. Um die vom Endkunden geforderte Verarbeitbarkeit und die UV-Licht-Absorption bei 400 nm von 99 % zu erhalten, sind Weichmacheranteile von ca. 11 bis 15 % und so große Mengen von UV-Absorbern in die Matrix einzubringen, dass es bei der Produktion der Folien bereits zu Absonderungen des UV-Absorbers auf den Transportwalzen beziehungsweise im nachgelagerten Saponifizierungsprozess des Laminatherstellers zum Austragen nicht ausreichend in die TAC-Matrix eingebundener UV-Absorberanteile kommt, die die UV-Absorption des Endproduktes verschlechtern.

Die Zugabe von farbverändernden oder anderen funktionalen Additiven ist hier nicht mehr möglich, so dass diese Additive in weitere zusätzliche Filmlagen eingebracht werden müssen. Diese Einzellagen unterscheiden sich nun in ihrem optischen und mechanischen Eigenschaftsgefüge, was letztendlich zu Beeinträchtigungen der Transmission und des spektral differenzierten Lichtbeugungsverhaltens des Endproduktes führen kann und den Hersteller der Folienlagenlaminate vor erhebliche Herausforderungen stellt. Durch die Überlagerung beziehungsweise Verstärkung der fertigungsbedingten Eigenschaftstoleranzen der Einzellagen, wie zum Beispiel lokale Dickenschwankungen, können im Endprodukt lokal Schwankungen der mechanischen und der optischen Parameter auftreten. Optische Schwankungen sind im Endprodukt oft kaum meßbare, jedoch mit dem Auge deutlich wahrnehmbare Inhomogenitäten (Streifen, lokale Aufhellungen oder Abdunkelungen, fleckenförmige Veränderungen etc.), die zu Abwertungen der Produktqualität und Reduzierung des Einsatzbereiches führen.

Die JP 2003 161807 A beschreibt ein Verfahren zur Herstellung eines Antireflexionsfilms, der mit einer speziellen fluororganischen Schicht versehen ist. Die Aufgabe dieses Verfahrens besteht in der Herstellung eines Antireflexionsfilms mit guter Verschleißfestigkeit, Antifouling-Eigenschaften und guter Lichtdurchlässigkeit. Der Antireflexionsfilm wird durch Bilden einer fluororganischen Dünnfilmschicht auf einem Substrat in einer direkten Weise oder durch eine andere Schicht hergestellt. Bei diesem Verfahren wird die fluororganische Dünnfilmschicht unter atmosphärischem Druck oder Druck in der Nähe des Atmosphärendrucks gebildet, indem Elektrizität zwischen Elektroden, die einander zugewandt sind, entladen wird, wodurch ein Plasma-Zustand mit einem reaktiven Gas, das eine spezifische Fluorverbindung enthält, hergestellt wird und eine Belichtung eines Substrats oder eines Substrats mit anderen Schichten mit dem reaktiven Gas im Plasmazustand erfolgt.

Aus der JP 2002 144357 A ist ein Lösungsgießverfahren zur Herstellung eines Celluloseacetatfilms unter Verwendung eines Gießbandes bekannt. Das Ziel dieses Verfahrens besteht vor allem darin, die Produktionsgeschwindigkeit innerhalb des Lösungsgießverfahrens zu erhöhen. Dabei soll eine Verbesserung des Herstellungsverfahrens für Cellulosetriacatatfilme durch Einbau einer zusätzlichen mechanischen Komponente hinter dem Gießwerkzeug erreicht werden.

In der JP 2005 104149 A ist ein Celluloseacylatfilm offenbart, der für einen optischen Film geeignet sein soll. Für dessen Herstellung wird das Celluloseacylat in einem gemischten Lösungsmittel, das aus Methylacetat, Aceton und einem Alkohol zusammengesetzt ist, gelöst, um eine Spinnlösung herzustellen. Wenn ein Alkohol zu der Spinnlösung zugesetzt wird, wird die Viskosität der Spinnlösung erhöht. Die Spinnlösung wird auf einen Träger gegossen und die geformte Gießfolie wird abgezogen und getrocknet, während sie in einer Zuführrichtung und/oder einer seitlichen Richtung unter einer Inertgas-Atmosphäre gestreckt wird, um den Film zu erzeugen. Dadurch, dass die Viskosität der Spinnlösung zum Zeitpunkt des Gießens erhöht wird und der gegossene Film leicht abgelöst wird, soll eine Filmbildung in hoher Geschwindigkeit ermöglicht werden. Der Film soll außerdem eine gute optische Isotropie und verbesserte optische Eigenschaften aufweisen.

In der US 2008/254236 A1 ist die Herstellung eines Celluloseacylatfilms beschrieben, der Celluloseacylat als Polymerkomponente enthält, die durch Substitution der Hydroxylgruppen von Cellulose mit Acetyl- und Acyl-Gruppen, die mehr als 3 C-Atome beinhalten, erhältlich ist. Es wird von einem gemischten Ester ausgegangen. Des Weiteren wird hier der Einsatz von UV-Absorbern beschrieben, denen eine filmstabilisierende Funktion zugeordnet wird.

Die US 2006/069192 A1 offenbart ein Schmelzgießverfahren, bei dem gehinderte Phenol-Antioxidantien (HALS) als Additive der thermischen Stabilität und der Photostabilität dienen. Zugesetzte Säurefänger und UV-Absorber unterstützen deren Wirkung beziehungsweise stabilisieren die Additive.

Die Aufgabe der Erfindung besteht darin, durch die Herstellung und den Einsatz von multifunktionalen Celluloseester-Folien perspektivisch die Anzahl der erforderlichen unterschiedlichen Einzellagen in einem Mehrschichtenverbundsystem, wie zum Beispiel einem Laminat, zu reduzieren, so dass die Qualität und insbesondere auch die Homogenität der optischen und mechanischen Eigenschaften des Gesamtsystems verbessert werden können.

Daneben soll es Herstellern optischer Komponenten - insbesondere im Bereich der Sonnenbrillenlinsenfertigung - ermöglicht werden, multifunktionale Celluloseester-Folien auch als Einzellage an Stelle eines mehrlagigen Folienverbundes einzusetzen, der üblicherweise aus unterschiedlichen funktionalen Schichten bestehen würde, indem Funktionen unterschiedlicher Schichten in einer Lage vereint werden.

Die Aufgabe der Erfindung wird durch multifunktionale optisch hochtransparente Folien gemäß dem unabhängigen Anspruch 1 gelöst, die als Sonnenlicht-Schutzfolien verwendet werden können. Es handelt sich um Folien auf der Basis von Celluloseestern, die folgende Komponenten innerhalb einer Folie beinhalten:
a) einen Celluloseester oder ein Gemisch aus Celluloseestern auf der Basis von Cellulosetriacetat, welcher/welches durch folgende Eigenschaften definiert ist:
   - als Rohstoffbasis Baumwoll-Linters,
   - einen niedrigen Anteil, das heißt von weniger als 300 ppm, vorzugsweise ≤ 150 ppm, so genannter doppelbrechender Partikel mit einer Größe kleiner 20 µm,
   - einen niedrigen Wasseranteil, das heißt von ≤ 1%,
   - einen niedrigen Anteil freier Essigsäure, das heißt von ≤ 300 ppm,
   - einen niedrigen Anteil von gelbildenden Komponenten, das heißt von ≤ 0,5 %,
   - eine sehr geringe Gelbfärbung, charakterisiert durch eine niedrige Hazen-Farbzahl (APHA-Wert) ≤ 70, bestimmt an einer 16 % -igen Lösung von Cellulosetriacetat, gelöst in Methylenchlorid nach der Methode ASTM D-1209,
   - einen niedrigen Anteil, das heißt von ≤ 0,5 %, an Fremdfasern und über- oder unterderivatisierten Partikeln mit einer Größe von weniger als 40 µm,
   - einen niedrigen Haze-Wert, das heißt von ≤ 0,4 % des zu einer Folie ausgezogenen, zuvor in Dichlormethan oder Aceton gelösten und unfiltrierten Cellulosederivats;
b) mindestens einen organischen oder anorganischen Stoff, der als Abstandshalter zwischen den Molekülketten des Celluloseesters wirksam ist und eine verbesserte Flexibilität und Elastizität der Folien im Sinne eines Weichmachers bewirkt sowie eine optimale Entfernung der in der Folie enthaltenen Restlösungsmittel während des Folientrocknungsprozesses ermöglicht;
c) mindestens drei organische oder anorganische Stoffe mit einer transmissionsbeeinflussenden absorptiven Funktion im Wellenlängenbereich von 300 nm bis 2500 nm, die zugleich auch synergistisch als Weichmacheräquivalent im Sinne eines Abstandshalters zwischen den Molekülketten der Celluloseestermatrix wirksam sind und eine Schutz- und Entlastungsfunktion für die Retina des menschlichen Auges besitzen, wobei sich diese Funktion primär auf die Reduzierung der auf das Auge einwirkenden Energieleistungsdichte in spezifischen, das heißt physiologisch relevanten Wellenlängenbereichen, zum Beispiel im UV-Bereich < 400 nm oder im für die Kontrastwahrnehmung relevanten Bereich bei 580 nm, bezieht, charakterisiert durch eine Reduzierung der Transmission des durch die Folie hindurchgehenden Lichtes. Auf Grund des synergistischen Effekts der Komponente c) bezüglich Komponente b) besteht hierbei ein definierter Zusammenhang zwischen den Anteilen beider Komponenten in Bezug auf die Folie und zueinander.

Die multifunktionale optisch hochtransparente Folie ist durch ein Verfahren zu deren Herstellung erhältlich, bei dem der Celluloseester oder das Gemisch aus Celluloseestern gemäß a) als Ausgangsmaterial vorliegt und eine Zugabe der Komponenten b) und c) als Additive erfolgt, wobei das nach a) verwendete Celluloseestermaterial zuvor in mindestens einem Lösungsmittel aus der Gruppe der halogenorganischen Lösemittel, der alkoholischen Lösemittel, der Carbonsäureester, der aromatischen Lösemittel, der Ether oder der Ketone weitestgehend gelöst, homogenisiert und vor Zugabe der in b) und c) genannten Komponenten in einem mehrstufigem Filtrationsprozess von Fremdpartikeln, Gelteilchen, Fasern und ungelösten Rohstoffkomponenten befreit wurde und die als Weichmacher und/oder als synergistische Weichmacheräquivalente wirksamen Komponenten b) und c) erst nach der Filtration zur Produktlösung zugegeben und anschließend gemeinsam mit der Produktlösung homogenisiert werden, und wobei der Anteil der als Weichmacher wirksamen und der - bezogen auf die Molekülketten des Celluloseesters - als Abstandshalter wirksamen Komponenten insgesamt kleiner oder gleich 25 % und der Anteil der Weichmacherkomponenten entsprechend b) kleiner oder gleich 20 % ist.

Im Rahmen der vorliegenden Erfindung ist der Begriff hochtransparent durch einen Haze-Wert von ≤ 1,0 % definiert. Der Haze-Wert wurde dabei mit dem Haze-Meßgerät "haze-gard plus (4725)" der Firma BYK Gardner entsprechend der Methode ASTM D 1003, D 1044 ermittelt. Die genannten Partikelgrößen im Nanometerbereich wurden durch die Hersteller mit Hilfe der Röntgendiffraktometrie und im Mikrometerbereich durch die Methode der Filtration über verschiedene Filter mit jeweils exakt definierter Porenweite, zum Beispiel 20 µm, 10 µm oder 5 µm, bestimmt.

Bei den erfindungsgemäßen Folien handelt es sich um mit mindestens zwei im lichtoptischen Bereich wirksamen absorptiven Funktionen ausgestatteten Folien auf der Basis von Celluloseestern. Als Bestandteile umfassen diese Folien die oben genannten synergistisch wirksamen, aufeinander abgestimmten Komponenten a-c), die jeweils bezogen auf die anderen Komponenten über mindestens eine gleichwertig wirksame funktionelle Eigenschaft verfügen.

Nach einer bevorzugten Ausführungsform der Erfindung stammen die entsprechend b) ausgewählten, als Weichmacherkomponente wirksamen Stoffe aus der Gruppe der Phosphorsäureester, Phthalsäureester, Carbonsäureester, Zitronensäureester, Fettsäureester, Glykole, Polyester und/oder Adipinsäureester, wobei auch weitere Substanzen mit ähnlicher Funktionalität eingesetzt werden können. Bevorzugt weisen diese Stoffe einen Siedepunkt größer 60 °C auf.

Als Phosphorsäureester können/kann dabei zum Beispiel Triphenylphosphat, Biphenyldiphenylphosphat, Tricresylphosphat, Cresyldiphenylphosphat, Octyldiphenylphosphat, Ethylhexyldiphenylphosphat, Isodecyldiphenylphosphat, Butylenbis-(diethylphosphat), Ethylenbis(diphenylphosphat), Triethylphosphat, Tri-n-butylphosphat, Phenylenbis(diphenylphosphat), Phenylenbis-(dibutyl-phosphat) und/oder Resorcinolbis(diphenylphosphat) eingesetzt werden.

Als Phthalsäureester können/kann zum Beispiel Diethylphthalat, Dimethoxyethylphthalat, Dimethylphthalat, Dioctylphthalat, Dicylohexylphthalat, Dibenzylphthalat, Benzylethylphthalat, Butylbenzylphthalat, Methylphthalylmethyl-glykolat, Ethylphthalylethylglykolat, Propylphthalylpropylglykolat, Butylphthalyl-butylglykolat und/oder Dicyclohexylterephthalat ausgewählt werden.

Als Carbonsäurester, einschließlich Zitronensäureester, Fettsäureester und Adipinsäureester, eignen/eignet sich zum Beispiel Sorbitolhexylpropionat, Xylitolpentaacetat, Trimethyltrimellitat, Triethyltrimellitat, Tributyltrimellitat, Diethylenglykoldibenzoat, Dipropylenglykoldibenzoat, Triethylenglykolbis-(2-ethylhexanonat), Tartrate, Oleate, Sebacate, Azelate, Ricinoleate, Diphenylsuccinat, Di-2-naphthyl-1,4-cyclohexyldicarboxylat, Tricyclohexyltri-barbamat, Tetra-3-methylphenyltetrahydrofuran-2,3,4,5-tetracarboxylat, Tetra-butyl-1,2,3,4-cyclopentyltetracarboxylat, Triphenyl-1,3,5-cyclohexyltricarboxylat, Triphenylbenzyl-1,3,5-tetracarboxylat, Triethylcitrat, Acetyltrimethylcitrat, Acetyltriethylcitrat, Acetyltributylcitrat, Dimethyladipat, Dioctyladipat, Dicyclohexyladipat, 2,2,4,4-Tetramethylcyclobutan-1,3-dioldiacetat, 2,2-Dimethyl-4,4-diethylcyclobutan-1,3-diol-diisobutyrat, 2,2,4,4-Tetramethylcyclo-butan-1,3-diol-di-n-decanonat, 2,2,4,4-Dimethylcyclobutan-1,3-diolbis(2-ethyl-hexanonat), Octylepoxytallat und/oder 2,2,4-Trimethyl-1,3-pentandioldiiso-butyrat.

Als Glykol sind/ist Glycerintriacetat (Triacetin), Gylcerintriproprionat (Triproprionin), Polyethylenglykol, Triethylenglykolbis-(2-ethylhexanonat), Diethylenglykoldibenzoat und/oder Dipropylenglykoldibenzoat bevorzugt.

Als Polyester können/kann zum Beispiel Polyestersuccinat und/oder Polyesteradipat eingesetzt werden.

Als weitere Substanzen mit ähnlicher Funktionalität eignen sich zum Beispiel Kampfer, Kampferanhydrid oder Butylbenzylsulfonamid.

Als synergistisch wirksame Komponenten entsprechend c) werden vorzugsweise Stoffe mit folgenden Eigenschaften eingesetzt:
- UV-Licht absorbierende Stoffe,
- IR-Licht absorbierende Stoffe,
- visuelles Licht absorbierende Farbstoffe,
- Licht im Wellenlängenbereich von 300 nm bis 2500 nm absorbierende oder reflektierende nanoskalige Stoffe mit einer mittleren Partikelgröße von ≤ 200 nm, die den Haze-Wert nur minimal, das heißt mit einem ΔHaze von ≤ 0,05, beeinflussen,
- photochrome Farbstoffe,
- thermochrome Farbstoffe,
- Lumineszenzfarbstoffe,
- antioxidativ als Stabilisierungsmittel wirksame, den Haze-Wert nicht beeinflussende transparente Stoffe und
- transparente Haftvermittler und Vernetzungsmittel.

Als synergistisch wirksame Komponenten entsprechend c) werden bevorzugt Stoffe eingesetzt, die zumindest in einem der nachfolgend aufgeführten Lösungsmittel entweder vollständig löslich oder stabil dispergierbar sind:
- Wasser,
- Eisessig,
- Methanol, Ethanol, Propanol, Butanol, Hexanol,
- Chloroform, Dichlormethan, Trichlormethan, Tetrachlormethan, Trichlorethan,
- Aceton, Methylethylketon,
- Dioxan, Tetrahydrofuran,
- Methoxypropanol, Ethoxypropanol,
- Benzol, Toluol, Xylol,
- Methylacetat, Ethylacetat, Propylacetat, Butylacetat,
- Dimethylsulfoxid und/oder
- Acetonitril, n-Hexan, n-Heptan.

Als synergistisch wirksame Komponenten entsprechend c) werden vorzugsweise ein organischer oder anorganischer Farbstoff oder Farbstoffe natürlichen oder synthetischen Ursprungs aus einer der nachfolgend aufgeführten Farbstoffklassen eingesetzt:
- nanoskalige Pigmentfarbstoffe,
- Metallkomplexfarbstoffe,
- Laserfarbstoffe,
- Lumineszenzfarbstoffe,
- photochrome Farbstoffe und thermochrome Farbstoffe,
- anthrachinonbasierte Farbstoffe,
- Cyaninfarbstoffe,
- Periononfarbstoffe und/oder
- Azofarbstoffe.

Als nanoskalige Pigmentfarbstoffe können beispielsweise Quinacridon-Pigmente, Subpthalocyanin-Pigmente und/oder Benzimidazolon Pigmente ausgewählt werden.

Als Metallkomplexfarbstoffe eignen sich insbesondere Kupferphthalocyanine, Chrom-Komplexe mit 1-[[2-hydroxy-4/5-nitrophenyl]-azo]-2-naphthaphenol, Solvent Brown 42, Solvent Black 27, Solvent Black 28, Solvent Black 29, Solvent Yellow 89, Solvent Orange 99 und/oder Solvent Red 130.

Bevorzugte Laserfarbstoffe sind Rhodamin 6G, Rhodamin 110, 7-Hydroxy-4-methylcoumarin, 7-Diethylamino-4-methylcoumarin, Ethyl-7-diethylamino-coumarin-3-carboxylat, 5-(4-Dimethylaminobenzyliden)-rhodanin, 9-Diethyl-aminobenzo[a]phenoxazon und/oder Bis(dithiobenzil)nickel.

Als Lumineszenzfarbstoffe werden zum Beispiel 5(6)-Carboxy-X-rhodamin, Fluorescein, 3,3'-Diethyloxacarbocyaniniodid , 2-Ethylhexyl-α-cyano-5-phenyl-2,4-pentadienoat, Ethyl-*α*-cyano-4-hydroxycinnamat, 1-(2-Chloro-5-sulfo-phenyl)-3-methyl-4-(4-sulfophenyl)-azo-2-pyrazolin-5-on-dinatrium, 3-Allyl-5-(3-ethyl-4-methyl-2-thiazolinyliden)-rhodanin, *N*-(1-Hexylheptyl)-perylen-3,4:9,10-tetracarbonsäure-3,4-anhydrid-9,10-imid, *N*-(1-Heptyloctyl)-perylen-3,4:9,10-tetracarbonsäure-3,4-anhydrid-9,10-imid, 12-(Hexylheptyl)-3,3-dimethyl-pyrimi-do-[2,1-a]-anthra-[2,1,9-def:6,5,10-d'e'f']-diisochinolin-6,11,13(2H,3H,4H,12H)-trion, Isobutyl-4,10-dicyanoperylen-3,9-dicarboxylat, Perylen-3,4,9,10-tetra-carbonsäurebis-(2',6'-diisopropylanilid) und/oder 4,5-Dimethyloxy-*N*-(2-ethylhexyl)-naphthalimid verwendet.

Geeignete photochrome beziehungsweise thermochrome Farbstoffe sind unter anderem Naphthopyrane, Spiro(indolin)pyridobenzoxazine, Spiro(indolin)-naphthoxazine, Spiro(indolin)benzoxazine wie zum Beispiel 2,2-Diphenyl-5-hydroxymethyl-6-methyl-9-methoxy-2H-naphtho-[1,2-b]-pyran, 2,2-Diphenyl-5-(2-ethoxy-2-oxoethoxycarbonyl)-8-methyl-2H-naphtho-[1,2-b]-pyran, 2,2-Di-phenyl-4-methoxycarbonyl-5-(2-methylpropionyloxy)-2H-naphtho-[1,2-b]-pyran, 3-(4-Methoxyphenyl)-3-(3-methyl-4-methoxyphenyl)-13-hydroxyindeno-[2,1-f]-naphtho-[1,2-b]-pyran, 3,3-Di-(4-methoxyphenyl)-13-hydroxy-13-methylindeno-[2,1-f]-naphtho-[1,2-b]-pyran, 3-(4-Methoxyphenyl)-3-(3,4-dimethoxyphenyl)-6,11-dimethyl-13,13-dipropylindeno-[2,1-f]-naphtho-[1,2-b]-pyran, Trimethyl-1,3,3-indolino-2-spiro-2'-methyl-8'-coumarino-[7,8-b]-pyran, Trimethyl-1,3,3-indolin-Z-spiro-2'-quinolino-[7,8-b]-pyran, Trimethyl-1,3,3-indolin-2-spiro-2'-dimethyl-6',7'-chromono-[7,8-b]-pyran, 1,3-Dihydro-6'-*N*-[2-(octadecanoyl-oxy)-ethyl]-piperazino-1,3,3-trimethylspiro-[2H-indol-2,3'-[3H]-naphth-[2,1-b]-(1,4)-oxazin], 1,3-Dihydro-9'-(octadecyloxyacetat)-1,3,3-trimethylspiro-[2H-indol-2,3'-[3H]-naphth-[2,1-b]-(1,4)-oxazin], Methyl-[phenylazothioameisensäure-2-phenylhydrazidato]-quecksilber, 1,3,3-Trimethyl-6'-nitrospiro-(2H-1-benzopyran-2,2'-indolin), 1,3,3-Trimethyl-6'-nitro-8'-methoxyspiro-(2H-1-benzopyran-2,2'-indolin), 1,3,3-Trimethyl-6'-nitro-8'-bromo-spiro-(2H-1-benzopyran-2,2'-indolin), 1,3-Trimethyl-5-chloro-6'-nitrospiro-(2H-1-benzopyran-2,2'-indolin), 1,3,3-Trimethylspiro-[2H-indol-2,3'-[3H]-pyrano[3H]-pyrano-[3,2-f-]quinolin, 5'-Penta-methylspiro-[2H-1,4-benzoxazin-2,2'-indolin], 2,3-Dicarbomethoxy-8a-methyl-spiro-[1,5,6,8a-tetrahydropyrrolo-[1,2-a]-[3,4]-dihydroisoquinolin-1,9'-fluoren], 2,3-Dicyano-8a-phenylspiro-[1,5,6,8a-tetrahydropyrrolo-[1,2-a]-[3,4]-dihydroiso-quinolin-1,9'-fluoren], 2,3-Dicarbomethoxyspiro-[1,2,3,8a-tetrahydro-pyrrolo-[1,2-a]-isoquinolin-1,9'-fluoren], *E*-*α*-(2,5-dimethyl-1-*p*-tolyl-3-pyrryl)-ethyliden-(isopropyliden)-bernsteinsäureanhydrid und/oder *E*-*α*-(1,5-diphenyl-2-methyl-3-pyrryl)-ethyliden-(isopropyliden)-bernsteinsäureanhydrid.

Bevorzugte anthrachinonbasierte Farbstoffe sind unter den Bezeichnungen Solvent Red 111, Solvent Blue 97 und Solvent Violet 13 bekannt.

Als Cyaninfarbstoffe können zum Beispiel 3,3'-Diethylthiacyaninethylsulfat, 3,3'-Bis-(3-sulfopropyl)-5,5'-dimethoxythiacyaninbetaintriethylammoniumsalz und/ oder 5,5'-Dimethoxy-3,3',9-triethyloxacarbocyaninthiocyanat eingesetzt werden.

Besonders geeignete Periononfarbstoffe sind unter den Bezeichnungen Solvent Red 179 und Solvent Red 135 bekannt.

Als Azofarbstoffe können/kann zum Beispiel 4-[(5-Cyano-1-ethyl-5,6-dihydro-2-hydroxy-4-methyl-6-oxo-3-pyridinyl)-azo]-1,3-benzoldisulfonat, 4-Phenylazodiphenylamin und/oder Solvent Yellow 14 eingesetzt werden.

Die synergistisch wirksamen Einzelfarbstoffe der Komponente c) weisen vorteilhafterweise folgende Eigenschaften auf:
- mindestens ein Transmissionsminimum im visuell sichtbaren Wellenlängenbereich von 400 nm bis 780 nm mit einer Bandbreite von maximal 75 nm bei 95% des Transmissionsminimalwertes,
- ein Molekulargewicht von ≥ 200 g/mol,
- eine hohe Langzeitstabilität der Transmissionseigenschaften im Endprodukt, das heißt die Abweichung der Transmissions- und Farbwerte von den Ausgangswerten darf maximal 10 % betragen, wenn die Lagerung oder die Materialbeanspruchung unter folgenden Bedingungen erfolgt:
   ▪ einer relativen Luftfeuchte von 50 %,
   ▪ einer Temperatur von 80 °C,
   ▪ einer Lagerzeit von 500 Stunden;
- ein Siedepunkt oder Zersetzungspunkt: ≥ 105 °C und
- eine Transmission bei 380 nm von ≤ 80 %.

Als synergistisch wirksame Komponenten werden vorzugsweise auch organische oder anorganische Stoffe eingesetzt, die bei einer Wellenlänge von 380 nm eine Transmission von ≤ 10 % der durchschnittlichen Transmission im Wellenlängenbereich von 400 nm bis 780 nm aufweisen oder auch einer der nachfolgend aufgeführten Substanzklassen zugeordnet werden können:
- Benzophenone,
- Benzotriazole,
- Carbonsäureester,
- Triazine oder
- nanoskalige Metalloxide mit einer durchschnittlichen Partikelgröße ≤ 250 nm.

Geeignete Benzophenone sind unter anderem 2-Hydroxybenzophenon, 2,2'-Dihydroxy-4,4'-dimethoxybenzophenon, 2,1'-Dihydroxy-4,4'-dimethoxybenzo-phenon, 2-Hydroxy-4-methoxybenzophenon, 2-Hydroxy-4-methoxy-5-sulfobenzophenon, 2-Hydroxy-4-n-octoxybenzophenon, 2,4-Dihydroxybenzophenon und Bis-(2-methoxy-4-hydroxy-5-benzophenylmethan).

Als Benzotriazol können/kann beispielsweise 2-(Hydroxy-5'-methylphenyl)-benzotriazol, 2,2'-(Dihydroxy-3',5'-di-tert-butylphenyl)-5-chlorobenzotriazol, 2-(2-Hydroxy-5-tert-octylphenyl)-benzotriazol, 2-(2'-Hydroxy-5'-methylphenyl)-benzotriazol, 2-(2'-Hydroxy-3'-(3",4",5",6"-tetrahydrophthalimidomethyl)-5'-methylphenyl)-benzotriazol und/oder 2,2-Methylenbis-(4-1,1,3,3-tetramethylbutyl)-6-(2H-benzotriazol-2-yl)-phenol eingesetzt werden.

Zu den bevorzugten Carbonsäureestern zählen zum Beispiel 4-tert-Butylphenylsalicylat, Phenylsalicylat, Phenylresorcyat, p-Octylphenylbenzoat, Bis-(p-nonylphenyl)-isophthalat, Bis-(p-nonylphenyl)-terephthalat, Diethyl-p-methoxybenzylidenmaleonat und Diethyldiphenylmethylenmaleonat.

Als Triazin können/kann zum Beispiel Hydroxy-3',5'-dimethylphenyl)-4,6-dimethyl-s-triazin, 2-(2'-Hydroxy-4',5'-dimethylphenyl)-4,6-dimethyl-s-triazin, 2-(2'-Hydroxy-5'-chlorophenyl)-4,6-dimethyl-s-triazin, 2-(2'-Hydroxyphenyl)-4,6-dimethyl-s-triazin, 2-(2'-Hydroxy-5'-tert-butylphenyl)-4,6-dimethyl-s-triazin, 2-(2'-Hydroxyphenyl)-4,6-didecyl-s-triazin, 2-(2'-Hydroxyphenyl)-4,6-bis-*β*-methyl-mercaptoethyl-s-triazin, 2-(2'-Hydroxyphenyl)-4,6-bis-*N*-dimethylaminoethyl-s-triazin, 2-(2'-Hydroxy-4'-methoxyphenyl)-4,6-diphenyl-s-triazin, 2-(2'-Hydroxy-4'-isopropyl)-4,6-diphenyl-s-triazin, 2,4-Bis-(2,4-dimethylphenyl)-6-(2-hydroxy-4-isooctylphenyl)-1,3,5-triazin und/oder 2,4,6-Tris-(2-hydroxy-4-octyloxyphenyl)-s-triazin verwendet werden.

Schließlich eignen sich als nanoskalige Metalloxide insbesondere Zinkoxid, Ceroxid, Titandioxid sowie Metall-Komplex-basierte Verbindungen wie zum Beispiel [2,2'-Thiobis-4-tert-octylphenolat)]-*n*-butylamin-nicke(II).

In einer vorteilhaften Ausgestaltung der Erfindung werden als synergistisch wirksame Komponenten entsprechend c) organische oder anorganische Stoffe eingesetzt, die bei einer Wellenlänge von 800 nm ± 10 nm eine Transmission von ≤ 40 % der durchschnittlichen Transmission im Wellenlängenbereich von 400 nm bis 780 nm aufweisen und somit als IR-Absorber eingesetzt werden können. Als Beispiele für entsprechende nanoskalige anorganische Verbindungen können hier aufgeführt werden:
Lanthanhexaborid, Samariumhexaborid, Chrom(III)-oxid, Kupferoxid, Titandioxid, Zinn(IV)oxid, Indiumoxid, Wolframoxide, Bariumwolframat, Rubidiumwolframat sowie Natriumwolframat.

Beispiele für entsprechend geeignete organische Verbindungen sind: 2,11,20,29-Tetra-tert-butyl-2,3-naphthalocyanin, Vanadyl-2,11,20,29-tetra-tert-butyl-2,3-naphthalocyanin, 2,9,16,23-Tetra-tert-butyl-29H,31H-phthalocyanin, Bis-(trihexylsiloxy)-silikon-2,3-naphthalocyanin, 5,9,14,18,23,27,32,36-Octabut-oxy-2,3-naphthalocyanin, Vanadyl-3,10,17,24-tetra-tert-butyl-1,8,15,22-tetrakis-(dimethylamino)-29H,31H-phthalocyanin, Nickel(II)-[5,9,14,18,23,27,32,36-octa-butoxy-2,3-naphthalocyanin], Dimethyl-[4-[1,7,7-tris-(4-dimethylaminophenyl)-2,4,6-heptatrienyliden]-2,5-cyclohexadien-1-yliden]-ammoniumperchlorat, 2-[2-[3-[(1,3-Dihydro-3,3-dimethyl-1-propyl-2H-indol-2-yliden)-ethyliden]-2-(phenyl-thio)-1-cyclohexen-1-yl]ethenyl]-3,3-dimethyl-1-propylindolium-perchlorat, 4,5:4',5'-Dibenzo-1,1'-dibutyl-3,3,3',3'-tetramethylindatricarbo-cyaninhexafluoro-phosphat, 1,4,5,8-Tetrakis(arylamino)anthraquinon, Bis-(arylen-dicarboximide)-*a*,*d*-1,5-diaminoanthraquinon, 4,4',4"-Tris-(*N*,*N*-phenyl-3-methyl-phenylamino)-triphenylammoniumhexafluoroantimonat und *N3,N3,N6,N6*-Tetrakis-[4-(dibutylamino)phenyl]-1,4-cyclohexadien-3,6-diaminiumhexafluoroantimonat (1:2).

Gemäß einer weiteren bevorzugten Ausführungsform der Erfindung werden als synergistisch wirksame Komponenten entsprechend c) organische oder anorganische Stoffe eingesetzt, die nach der Einwirkung von Licht einer Wellenlänge (λ) ≤ 400 nm eine reversible Veränderung der Transmission im Bereich des sichtbaren Lichtes und eine Reduzierung der Transmission im Bereich des UV-Lichtes zeigen und somit eine Reduzierung der auf die Augen einwirkenden Strahlungsenergie im Bereich von 300 nm bis 780 nm bewirken, wobei die Komponenten folgendes Eigenschaftsprofil aufweisen:
• eine Foliendicke von 30 µm bis 300 µm,
• eine Bruchfestigkeit von ≥ 95 N/mm²,
• eine Dehnung von ≥ 12 %,
• einen Elastizitätsmodul von ≥ 2.500 N/mm²,
• eine Temperaturbeständigkeit mit einer Stabilität bis 150 °C ohne Zersetzung, Schmelzen oder irreversible Verformung,
• eine hohe Langzeitstabilität der optischen Eigenschaften, das heißt, das Niveau der Haze-Werte und der Transmissionswerte weicht maximal 10 % von den Ausgangswerten nach einer Lagerung über 500 Stunden bei 80 °C/50 % relative Feuchte ab,
• einen Weichmachergehalt von ≤ 20 Massen-%, wobei der Anteil an Triphenylphosphat einen Gehalt von 16 Massen-% nicht übersteigt,
• einen Additivgehalt von ≤ 5 Massen-%,
• einen Haze-Wert von ≤ 0,75 %, bezogen auf 180 µm Foliendicke,
• eine Transmission vor der Einwirkung von Licht von λ ≤ 400 nm:

| |
|---|
| o Transmission bei 550 nm von ≥ 50 %, |

• eine Transmission nach der Einwirkung von Licht von λ ≤ 400 nm bei einerEinwirkzeit von 300 s:

| |
|---|
| o Transmission bei 380 nm von ≤ 30 %, |
| o Transmission bei 400 nm von ≤ 50 %, |
| o Transmission bei 550 nm von ≤ 50 %. |

Zusätzlich zu den synergistisch wirksamen Komponenten entsprechend c) werden zur Verbesserung der Langzeit- und Temperaturstabilität vorzugsweise Stabilisierungsmittel, wie Antioxidantien oder HALS-Verbindungen (Hindered Amine Light Stabilizers), eingesetzt.

Zu diesen Stabilisierungsmitteln zählen unter anderem, aber nicht ausschließlich:
- gehinderte Phenole, wie zum Beispiel 2,6-Di-tert-butyl-4-methylphenol, 2,2'-Methylenbis-(4-methyl-6-tert-butylphenol), *n*-Octadecyl-3,5-di-tert-butyl-4-hydroxyphenyl)-propionat, n-Octadecyl-3-(3,5-di-tert-butyl-4-hydroxybenzoat, *n-*Hexyl-3,5-di-tert-butyl-4-hydroxyphenylbenzoat, Ethyl-*α*-(4-hydroxy-3,5-di-tert-butylphenyl)-isobutyrat, Octadecyl-*α*-(4-hydroxy-3,5-di-tert-butylphenyl)-isobutyrat, 2-n-Octylthio)-ethyl-3,5-di-tert-butyl-4-hydroxy-benzoat, 2-*n*-Octylthio)-ethyl-3,5-dibutyl-4-hydroxy-phenylacetat, Diethylglykolbis-(3,5-di-tert-butyl-4-hydroxyphenyl)-propionat, Stearylamido-*N*,*N*-bis-[ethylen-3-(3,5-di-tert-butyl-4-hydroxyphenyl)-propionat], *n*-Butylimino-*N*,*N*-bis-[ethylen-3-(3,5-di-tert-butyl-4-hydroxyphenyl)-propionat], 2-(2-Stearoyloxyethylthio)-ethyl-7-(3-methyl-5-tert-butyl-4-hydroxyphenyl)-heptanoat, 1,2-Propylenglykolbis-[3-(3,5-di-tert-butyl-4-hydroxyphenyl)-propionat], Ethylenglykolbis-[3-(3,5-di-tert-butyl-4-hydroxyphenyl)-propionat], Ethylenglykolbis-(3,5-di-tert-butyl-4-hydroxyphenylacetat), Glycerin-1-*n*-octadecanoat-2,3-bis-(3,5-di-tert-butyl-4-hydoxyphenylacetat), Sorbitolhexa-[3-(3,5-di-tert-butyl-4-hydroxyphenyl)-propionat], 1,6-n-Hexandiol-bis-[(3',5'-di-tert-butyl-4-hydroxyphenyl)-propionat], Pentaerythritoltetrakis-(3,5-di-tert-butyl-4-hydroxyhydrocinnamat);
- HALS-Verbindungen, wie zum Beispiel *N*-(2-Ethoxyphenyl)-*N*'-(4-isododecylphenyl)-ethandiamid, Bis-(1,2,2,6,6-pentamethyl-4-piperdinyl)-[3,5-bis-(1,1-dimethylethyl-4-hydroxyphenyl)-methyl]-butylpropandioat, Bis-(2,2,6,6-tetramethyl-4-piperdinyl)-decandioat, 1-Acetyl-4-(3-dodecyl-2,5-dioxo-1-pyrrolidinyl)-2,2,6,6-tetramethylpiperidin, SANDUVOR 3051/3052/3055/3056, 4-Hydroxy-2,2,6,6-tetramethylpiperidin, 1-Allyl-4-hydroxy-2,2,6,6-tetramethylpiperidin, 1-Benzyl-4-hydroxy-2,2,6,6-tetramethylpiperidin, 4-Stearoyloxy-2,2,6,6-tetramethylpiperidin, 1-Benzyl-2,2,6,6-tetramethyl-4-pyperidinylmaleinat, (Di-2,2,6,6-tetramethylpiperidin-4-yl)-adipat, Trimellitsäure-tri-(2,2,6,6-tetramethylpiperidin-4-yl)-ester, 1-Acryloyl-4-benzyloxy-2,2,6,6-tetramethylpiperidin, Tris-(1-propyl-2,2,6,6-tetramethylpiperidin-4-yl)-phosphat, *N*,*N*'-Bis-(2,2,6,6-tetramethylpiperidin-4-yl)-hexamethylen-1,6-diamin, 1-Acetyl-4-(*N*-cyclohexylacetamido)-2,2,6,6-tetramethylpiperidin, 4-Methacrylamido-1,2,2,6,6-pentaethylpiperidin, Bis-(2,2,6,6-pentamethyl-4-piperidenyl)-sebacat, Bis-(1,2,2,6,6-pentamethyl-4-piperdinyl)-sebacat, Methyl-(1,2,2,6,6-pentamethyl-4-piperdinyl)-sebacat, *N*-*β*-Hydroxyethyl-2,2,6,6-tetramethyl-4-hydroxypiperidin;
- Polyphenole, wie beispielsweise Tetrakis-[methylen-(3,5-di-tert-butyl-4-hydroxyhydrocinnamat)]-methan, 1,3,5-Trimethyl-2,4,6-tris-(3,5-di-tert-butyl-4'-hydroxybenzyl)benzen, 1,3,5-Tris-(3,5-di-tert-butyl-4'-hydroxybenzyl)-isocyanurat, 3,5-Di-tert-butyl-4-hydroxyhydrocinnamat-Triester mit 1,3,5-Tris-(2-hydroxyethyl)-triazin-2,4,6-(1H,3H,5H)-trion, 1,3,5-Tris-(4-tert-butyl-3-hydroxy-2,6-dimethylbenzyl)-triazin-2,4,6-(1H,3H,5H)-trion;
- Formamidine: *N*'-(4-Ethoxycarbonylphenyl)-*N*-methyl-*N*-phenylformamidin, *N*,*N*'-Bis-(4-ethoxycarbonylphenyl)-*N*-methylformamidin, *N*-(4-Dimethylaminophenyl)-*N*'-(4-ethoxy-carbonylphenyl)-*N*-methylformamidin, *N*'-(3-Hydroxy-4-methoxycarbonylphenyl)-*N*-methyl-*N*-phenylformamidin, *N*-Butyl-*N*-phenyl-*N*'-(4-ethoxycarbonylphenyl)-formamidin, *N*'-(4-Isopropoxycarbonylphenyl)-*N*-methyl-*N-*phenylformamidin, *N*'-(2-Chloro-4-methoxycarbonylphenyl)-*N*-methyl-*N-*phenylformamidin und/oder
- epoxidierte Verbindungen, wie zum Beispiel Butylepoxystearat, epoxidiertes Sojabohnenöl, epoxidiertes Leinsamenöl, epoxidiertes Rapsöl, Epoxymethyloleat, Epoxybutyloleat, Bisphenol-A-diglycidether, Bisphenol-F-diglycidether, Glicydilylacrylat, Glycidiylmethacrylat, EPON Resin 815, epoxidiertes Polybutadien.

Gemäß einer besonders bevorzugten Ausführungsform der Erfindung sind die Komponenten a) bis c) derart kombiniert, dass bereits in einer Einzellage eine Multifunktionalität erreicht ist, die durch folgendes Eigenschaftsprofil definiert ist:
• eine Foliendicke von 30 µm bis 300 µm,
• eine Bruchfestigkeit von ≥ 95 N/mm²,
• eine Dehnung von ≥ 12 %,
• einen Elastizitätsmodul von ≥ 2.500 N/mm²,
• eine Temperaturbeständigkeit mit einer Stabilität bis 150 °C ohne Zersetzung, Schmelzen oder irreversible Verformung,
• eine hohe Langzeitstabilität der optischen Eigenschaften, das heißt, das Niveau der Haze-Werte und der Transmissionswerte weicht maximal 10 % von den Ausgangswerten nach einer Lagerung über 500 Stunden bei 80 °C/50 % relativer Feuchte ab,
• einen Weichmachergehalt von ≤ 13 Massen-%,
• einen Additivgehalt von ≤ 5 Massen-%,
• einem Haze-Wert: ≤ 0,75 %, bezogen auf 180 µm Foliendicke,
• einer Transmission bei 400 nm: ≤ 50 % und
• Farbwerten gemäß CIE-Lab 1976; 10°; D 65:

| |
|---|
| ▪ L: 30 bis 80, |
| ▪ a: - 100 bis + 100, |
| ▪ b: - 150 bis + 150. |

Die Komponenten a) bis c) sind dabei vorzugsweise derart kombiniert, dass ein verbesserter Schutz der Netzhaut und eine hohe Entlastung des Auges sowohl durch die Absorption von UV-Licht als auch durch Absorption von Lichtanteilen im visuellen Bereich bei einer Wellenlänge von 580 nm und/oder 490 nm und/oder 435 nm erfolgen kann, wobei die Folien folgendes Eigenschaftsprofil aufweisen:
- eine Foliendicke von 70 µm bis 270 µm,
- eine Bruchfestigkeit von ≥ 95 N/mm²,
- eine Dehnung von ≥ 12 %,
- einen Elastizitätsmodul von ≥ 2.500 N/mm²,
- eine Temperaturbeständigkeit mit einer Stabilität bis 150 °C ohne Zersetzung, Schmelzen oder irreversible Verformung,
- eine hohe Langzeitstabilität der optischen Eigenschaften bei 500 Stunden bei 80 °C/50 % relativer Feuchte,
- einen Weichmachergehalt von ≤ 13 Massen-%,
- einen Additivgehalt von ≤ 5 Massen-%,
- einen Haze-Wert von ≤ 0,75 %, bezogen auf 180 µm Foliendicke,
- eine Transmission bei 400 nm von ≤ 50 %,
- eine Transmission bei 435 nm von ≤ 70 % des Transmissionswertes, der bei einer Wellenlänge von 450 nm gemessen wird,
- eine Transmission bei 490 nm von ≤ 70 % des Transmissionswertes, der bei einer Wellenlänge von 525 nm gemessen wird,
- eine Transmission bei 580 nm von ≤ 70 % des Transmissionswertes, der bei einer Wellenlänge von 550 nm gemessen wird,
- eine Transmission bei 650 nm von ≥ 20 %.

Weitere Ausführungsformen dieser Variante beinhalten unter Aufrechterhaltung der Folieneigenschaften eine Kombination aus UV-Absorbern und Farbstoffen, die nur bei einer Wellenlänge von 580 nm und/oder einer Wellenlänge von 490 nm Licht absorbieren und dadurch zu einer Entlastung des Auges beitragen. Hierbei werden Folien mit folgenden Transmissionswerten erhalten:
- eine Transmission bei 400 nm von ≤ 50 %,
- eine Transmission bei 490 nm von ≤ 70 % des Transmissionswertes, der bei einer Wellenlänge von 525 nm gemessen wird, sofern ein synergistisch wirksamer Farbstoff mit einem Absorptionsmaximum bei 490 nm enthalten ist und/oder
- eine Transmission bei 580 nm von ≤ 70 % des Transmissionswertes, der bei einer Wellenlänge von 550 nm gemessen wird, sofern ein synergistisch wirksamer Farbstoff mit einem Absorptionsmaximum bei 580 nm enthalten ist,
- eine Transmission bei 650 nm von ≥ 20 %.

In einer weiteren Ausführungsform werden die Komponenten a) bis c) vorzugsweise derart kombiniert, dass ein verbesserter Schutz der Netzhaut und eine hohe Entlastung des Auges vor allem durch die Absorption von UV-Licht und die Absorption von Lichtanteilen im visuell blauen Bereich bei einer Wellenlänge von 435 nm erfolgen kann, wobei die Folien folgendes Eigenschaftsprofil aufweisen:
- eine Foliendicke von 70 µm bis 270 µm,
- eine Bruchfestigkeit von ≥ 95 N/mm²,
- eine Dehnung von ≥ 12 %,
- einen Elastizitätsmodul von ≥ 2.500 N/mm²,
- eine Temperaturbeständigkeit mit einer Stabilität bis 150 °C ohne Zersetzung, Schmelzen oder irreversible Verformung,
- eine hohe Langzeitstabilität der optischen Eigenschaften bei 500 Stunden bei 80 °C/50 % relativer Feuchte,
- einen Weichmachergehalt von ≤ 13 Massen- %,
- einen Additivgehalt von ≤ 5 Massen- %,
- einen Haze-Wert von ≤ 0,75 %, bezogen auf 180 µm Foliendicke,
- eine Transmission bei 380 nm von ≤ 5 %,
- eine Transmission bei 400 nm von ≤ 15 %,
- eine Transmission bei 435 nm von ≤ 70 % des Transmissionswertes, der bei einer Wellenlänge von 450 nm gemessen wird.

In einer besonders bevorzugten Ausführungsform sind die Komponenten a) bis c) vorteilhafterweise derart kombiniert, dass insbesondere unter Einwirkung hoher Lichtintensitäten im UV-Bereich ein verbesserter Schutz der Netzhaut und eine hohe Entlastung des Auges sowohl durch die Absorption von UV-Licht als auch durch Absorption von Lichtanteilen im visuellen Bereich bei einer Wellenlänge von 435 nm und/oder 490 nm und/oder 580 nm erfolgen kann, wobei durch den Einsatz photochromer Farbstoffe die Verringerung der Transmission reversibel ist, so dass bei Wegfall der UV-Licht-Einwirkung eine Aufhellung der Folie erfolgt, ohne dass die retinaentlastende kontrastverbessernde Wirkung reduziert wird.

Für die Herstellung von Celluloseester-Filmen ist es allgemeine Praxis, ein möglichst homoges derivatisiertes Ausgangsmaterial, wie zum Beispiel Cellulosediacetat oder Cellulosetriacetat, in einem organischen Lösemittel oder Lösemittelgemisch aufzulösen und die notwendigen Additive wie Weichmacher, Stabilisatoren oder Farbstoffe in dieses Material einzubringen und anschließend die so entstandene gießfähige mittel- bis hochviskose Lösung durch Filtration und Entgasungsprozesse zu reinigen und zu einer Folie zu vergießen. Ein ähnlicher Herstellungsprozess wird beispielsweise in den Patentschriften US 3547668 A, EP 0708135 B1, US 3489584 A und US 5152947 A beschrieben.

Eine erfindungsgemäße multifunktionale optisch hochtransparente Folie kann durch ein Verfahren hergestellt werden, bei dem der Celluloseester oder das Gemisch aus Celluloseestern gemäß a) als Ausgangsmaterial vorliegt und eine Zugabe der Komponenten b) und c) als Additive erfolgt. Im Rahmen der Herstellung besonders hochwertiger Celluloseester-Filme für den späteren Einsatz im LCD-Monitorbereich werden grundsätzlich Rohstoffe eingesetzt, die sehr wenige Verunreinigungen und einen geringen Gehalt freier Säuren enthalten.

Im Rahmen der Voruntersuchungen zur Herstellung verbesserter Celluloseesterfolien wurde nun überraschend festgestellt, dass bei Einsatz der oben genannten hochwertigen Celluloseester und Kombination synergistisch wirkender Additive nicht nur eine deutlich verbesserte optische Qualität, sondern auch eine erweiterte Funktionalität der Folie erhalten werden kann. Dies ist offenbar unter anderem darauf zurückzuführen, dass bereits durch den Herstellungs- und Aufbereitungsprozess des Rohstoffherstellers in der Celluloseestermatrix mehr freie Plätze zwischen den Molekülketten zur Verfügung stehen, die dann durch die entsprechenden Additive belegt werden können.

Bei weiteren Untersuchungen hat sich dann gezeigt, dass für die Herstellung multifunktionaler Celluloseesterfolien als Ausgangsrohstoff Celluloseester einzusetzen sind, die die oben unter a) genannten Parameter aufweisen.

Gemäß der Erfindung wird bei diesen Folien für die Komponente a) ein Celluloseestermaterial hoher Reinheit verwendet, das zuvor in mindestens einem Lösungsmittel aus der Gruppe der halogenorganischen Lösemittel, der alkoholischen Lösemittel, der Carbonsäureester, der aromatischen Lösemittel, der Ether oder der Ketone weitestgehend gelöst, homogenisiert und vor Zugabe der oben in b) und c) genannten funktionalen Komponenten in einem mehrstufigem Filtrationsprozess von Fremdpartikeln, Gelteilchen, Fasern und ungelösten Rohstoffkomponenten befreit wurde.

Es hat sich als besonders vorteilhaft erwiesen, wenn das Celluloseestermaterial, erfindungsgemäß Cellulosetriacetat, mit dem oben genannten Eigenschaftsprofil durch einen mehrstufigen Aufbereitungs- und Filtrationsprozess weiter gereinigt wird, um die Ausgangsmatrix sowohl im zwischenmolekularen als auch im makroskopischen Bereich möglichst umfassend von störenden Fremdkomponenten zu befreien. Dieser Prozess kann dabei erheblich über das bislang üblicherweise beschriebene Herstellungsverfahren für Cellulosederivatfolien hinausgehen und beispielsweise auch einen Feinstfiltrationsschritt beinhalten, bei dem Filtermaterial mit einer Filtergröße von ≤ 5 µm oder in Ausnahmefällen auch ≤ 2 µm eingesetzt wird.

Im Rahmen des Aufbereitungsprozesses kann auch eine mehrstufige Auflösung oder Aufreinigung des Rohstoffes in verschiedenen organischen Lösungsmitteln oder Kombinationen dieser Lösungsmittel, wie zum Beispiel Methylacetat, Ethylacetat, Butylacetat, Chloroform, Dichlormethan, Trichlormethan, Aceton, Methylethylketon, Butanol, Propanol, Ethanol, Methanol erfolgen.

Die Zugabe der jeweils erforderlichen Additive sollte bevorzugt im Rahmen des Lösungsprozesses oder eines nachgelagerten Verdünnungsprozesses erfolgen, wobei ebenfalls überraschend festgestellt wurde, dass die Reihenfolge der Zugabe der Komponenten eine wichtige Rolle für die späteren Produkteigenschaften spielt und sowohl synergistische als auch divergente Wechselwirkungen der Additive untereinander und auch hinsichtlich der Einlagerung in die umgebende Cellulosederivatmatrix beachtet werden müssen.

Als funktionale Additive können, wie bereits beschrieben, Weichmacher, UV- oder IR- Absorber, Farbstoffe, strukturverändernde Fremdpolymere, Antiblock-Mittel, Vernetzungsmittel, Stabilisatoren, Säureblocker, Radikalfänger und Wasser sowie weitere für den jeweiligen Anwendungsfall auszuwählende organische oder anorganische Substanzen zugegeben werden.

Ein wichtiges Merkmal der einzubringenden Additive ist die Löslichkeit beziehungsweise die stabile Dispergierbarkeit in einem der oben aufgeführten Lösemittel oder deren Gemisch.

Als eine Grundidee der Erfindung ist der Austausch gewisser Anteile eines Additivs durch Anteile eines oder mehrerer synergistisch wirkender Additive mit sowohl ähnlicher funktionaler Wirkung als auch zusätzlichen funktionellen Eigenschaften anzusehen.

Erfindungsgemäß werden die als Weichmacher und/oder als synergistische Weichmacheräquivalente wirksamen Komponenten b) und c) zumindest teilweise erst nach der Filtration zur Produktlösung zugegeben und anschließend gemeinsam mit der Produktlösung homogenisiert, wobei der Anteil der als Weichmacher wirksamen und der - bezogen auf die Molekülketten des Celluloseesters - als Abstandshalter wirksamen Komponenten insgesamt kleiner oder gleich 25 % und der Anteil der Weichmacherkomponenten entsprechend b) kleiner oder gleich 20 % ist.

Gemäß einer besonders bevorzugten Ausführungsform des Verfahrens liegt der Anteil der zur Produktlösung zugegebenen als Weichmacher wirksamen Komponenten bei weniger als 16 %, wobei der Anteil der synergistisch als Weichmacher und Abstandshalter wirksamen Komponente nach c) mindestens 1,2 Massen-%, bezogen auf die Gesamtmenge der als Weichmacher wirksamen Komponenten b) und c), beträgt. Mit anderen Worten, die üblicherweise entsprechend b) verwendete Weichmacherkomponente wird teilweise durch eine synergistisch als Weichmacher und Abstandshalter wirksame Komponente gemäß c) ersetzt. Überraschenderweise kommt es dabei zu keinen wesentlichen Veränderungen, das heißt, der Austausch führt zu ≤ 3 % Veränderung der mechanischen Eigenschaften der Folie gegenüber einer Folie ohne den teilweisen Ersatz der Weichmacherkomponente b).

Es wird beispielsweise ein Anteil von 5 % des Weichmachers durch UV-Licht absorbierende Substrate und geeignete organische Farbstoffe ersetzt, die neben der Licht absorbierenden Funktionalität auch eine Funktionalität als Weichmacherkomponente aufweisen. Die dadurch hergestellten Folien besitzen nunmehr bei nahezu identischen mechanischen Eigenschaften auch eine definierte UV-Absorption und Filterwirkung im visuellen Bereich.

Durch Zugabe der Farbstoffkomponenten im Rahmen des Lösungsprozesses an Stelle des reduzierten Weichmacheranteils werden die Additive optimal in die Folienmatrix eingebaut. In einer anderen Ausführungsvariante ist es auch möglich, die Additivkomponenten im Weichmacher zu lösen beziehungsweise auch gemeinsam mit dem Weichmacher zu lösen und anschließend der bereits aufbereiteten Cellulosetriacetatlösung zuzugeben. Denkbar sind auch Kombinationen dieser Varianten, um eine bestmögliche Homogenisierung und Gleichverteilung der eingebrachten Additive zu erzielen.

Im Gegensatz zu den bisherigen Herstellungsverfahren richtet sich der Herstellungsprozess für die neuartigen multifunktionalen Folien auf eine synergistische Kombination aller Additive aus, um mit einer jeweils optimierten, das heißt minimierten Einsatzmenge des einzelnen Additives in Kombination mit allen anderen notwendigen Additiven das geforderte Eigenschaftsprofil des Endproduktes zu realisieren.

Farbstoffe werden hierbei durchaus hinsichtlich ihrer Eigenschaft als Weichmacherkomponente und Weichmacher auch hinsichtlich ihrer Licht- oder UV-absorbierenden Wirkung eingesetzt. Denkbar sind auch Kombinationen aus Farbstoffen mit UV-Absorber-Funktionalität und Farbstoffen mit thermochromer oder photochromer Funktionalität, die zusätzlich auch eine IR-absorbierende Wirkung aufweisen können.

Neuartig an den erfindungsgemäßen multifunktionalen Celluloseesterfolien ist, dass beginnend mit der Rohstoffauswahl und -aufbereitung die Auswahl der jeweils einzusetzenden Additivkomponenten in einem komplexen Verfahren nach Durchführung umfangreicher Testreihen zur Untersuchung der Multifunktionalität der Einzelkomponenten, deren Kombinierbarkeit untereinander und die notwendige Reihenfolge der Zugabe erfolgt, um eine optimale Verteilung in der Ausgangsmatrix zu erreichen, ohne die mechanischen und optischen Eigenschaften negativ zu verändern.

Zur Gruppe der Weichmacher können beispielsweise folgende Stoffe gehören: Organische Stoffe aus der Gruppe der Phosphorsäureester, Phthalsäureester, Carbonsäureester, Zitronensäureester, Fettsäureester, Glykole, Polyester, Adipinsäureester und weitere Substanzen bevorzugt mit einem Siedepunkt größer 60 °C.

Als UV-Absorber können dabei beispielsweise organische oder anorganische Stoffe eingesetzt werden, die bei einer Wellenlänge von 380 nm eine Transmission von ≤ 10 % der durchschnittlichen Transmission im Wellenlängenbereich von 400 nm bis 780 nm aufweisen. Geeignete Substanzen können dabei folgenden Stoffgruppen angehören: Benzophenone, Benzotriazole, Salicate, Triazine, Acrylate oder auch nanoskalige Metalloxide mit einer durchschnittlichen Partikelgröße ≤ 250 nm oder auch Metallkomplexe.

Die gemäß der oben beschriebenen einzusetzenden organischen oder anorganischen Farbstoffe weisen vorteilhaft mindestens drei, bevorzugt fünf der nachfolgend aufgeführten Eigenschaften auf:
- ein organischer oder anorganischer Farbstoff natürlichen oder synthetischen Ursprungs, beispielsweise aus einer der folgenden Farbstoffgruppen:
   Metallkomplexfarbstoffe, nanoskalige Pigmentfarbstoffe, Laserfarbstoffe,
   Lumineszenzfarbstoffe, Perylenfarbstoffe, Naphthalamidfarbstoffe,
   Photochrome Farbstoffe, Thermochrome Farbstoffe, sonstige funktionelle Farbstoffe, Anthrachinonfarbstoffe, Cyaninfarbstoffe, Azofarbstoffe oder
   sonstige funktionelle Farbststoffe;
- mindestens ein Transmissionsminimum im visuell sichtbaren Wellenlängenbereich von 400 nm bis 750 nm mit einer Bandbreite von maximal 75 nm bei 95 % des Transmissionsminimalwertes;
- ein Molekulargewicht ≥ 200 g/mol;
- eine vollständige Löslichkeit oder Dispergierbarkeit in mindestens einem der nachfolgend aufgeführten Lösungsmittel: Wasser, Eisessig, Methanol, Ethanol, Propanol, Butanol, Hexanol, Chloroform, Dichlormethan, Trichlormethan, Tetrachlormethan, Aceton, Methylethylketon, Dioxan, Tetrahydrofuran, Methoxypropanol, Ethoxypropanol, Benzol, Toluol, Xylol, Methylacetat, Ethylacetat, Propylacetat, Butylacetat, Dimethylsulfoxid, Acetonitril, n-Hexan, n-Heptan, Trichlorethan;
- eine Stabilität der Transmissionseigenschaften im Endprodukt mindestens bei 95 % der Ausgangswerte bei einer Lagerung unter folgenden Bedingungen:
   o einer relativen Luftfeuchte: 50 %
   o einer Temperatur: 80 °C und
   o einer Lagerzeit: 500 Stunden;
- ein Siedepunkt beziehungsweise Zersetzungspunkt von ≥ 105 °C und
- eine Transmission bei 380 nm von ≤ 80 %.

Weitere Additive können sein: Vernetzungsmittel, nanoskalige Antiblockmittel mit einer durchschnittlichen Partikelgröße von ≤ 250 nm und einer maximalen Partikelgröße von ≤ 1 µm, Antioxidationsmittel, Radikalfänger, Flammschutzmittel, Reinstwasser und sonstige funktionelle Substanzen.

Auf diesem Weg sind Folien im Dickenbereich von 30 µm bis 300 µm herstellbar, die folgende Eigenschaften aufweisen können:
- eine Bruchfestigkeit von ≥ 95 N/mm²,
- eine Dehnung von ≥ 12 %,
- ein E-Modul von ≥ 2.500 N/mm²,
- eine Temperaturbeständigkeit: je nach Ausführungsform bis 200 °C,
- ein Weichmachergehalt: von ≤ 20 Massen-%,
- ein Haze-Wert von ≤ 0,5 %, bevorzugt ≤ 0,3 %,
- eine Transmission bei 380 nm von 0,1 % bis 92 %,
- eine Transmission bei 400 nm von 0,1 % bis 92 %,
- eine Transmission bei 435 nm von 1 % bis 92 %,
- eine Transmission bei 490 nm von 1 % bis 92 %,
- eine Transmission bei 550 nm von 1 % bis 92 %,
- eine Transmission bei 580 nm von 1 % bis 92 %,
- eine Transmission bei 800 nm von 5 % bis 92 % und
- eine Transmission bei 550 nm nach Einwirkung von UVA oder UVB-Licht von 20 % bis 92 %.

In einer bevorzugten Ausführungsform handelt es sich um multifunktionale langzeitstabile Farbfolien mit UV-absorbierender Funktion und einer Filterwirkung im retinagefährdenden blauen Spektralbereich bei 435 nm und einer Filterwirkung im Retinazapfenirritations- beziehungsweise Farbsensitivitätsübergangsbereich bei 490 nm und 580 nm mit folgenden kennzeichnenden Eigenschaften:
- eine Foliendicke von 70 µm bis 220 µm,
- eine Bruchfestigkeit von ≥ 95 N/mm²,
- eine Dehnung von ≥ 12 %,
- ein Elastizitätsmodul von ≥ 2.500 N/mm²,
- eine Temperaturbeständigkeit bis 150 °C,
- ein Weichmachergehalt von ≤ 16 Massen-%,
- ein Haze-Wert von ≤ 0,7 %,
- eine Transmission bei 400 nm von 1% bis 50 %,
- eine Transmission bei 435 nm von ≤ 70 % des Transmissionswertes, der bei einer Wellenlänge von 450 nm gemessen wird,
- eine Transmission bei 490 nm von ≤ 70% des Transmissionswertes, der bei einer Wellenlänge von 525 nm gemessen wird,
- eine Transmission bei 580 nm von ≤ 70 % des Transmissionswertes, der bei einer Wellenlänge von 550 nm gemessen wird,
- eine Transmission bei 650 nm von ≥ 20 %.

Optional können Folien dieser Ausführungsform mit einer IR-absorbierenden Farbstoffkomponente und/oder einer photochromen Farbstoffkomponente in ihrem Einsatzbereich erweitert werden, ohne eine der oben aufgeführten Eigenschaften zu verlieren.

Durch die erfindungsgemäßen multifunktionalen Folien ergibt sich sowohl für den Hersteller der Folien als auch für die weiterverarbeitenden Unternehmen sowie für den Endkunden eine Reihe von ökonomischen, ökologischen und qualitativen Vorteilen. Da die Folien in ihrem Eigenschaftsprofil sehr homogen sind, können sie im Rahmen der weiteren Verarbeitung beispielsweise zu Laminaten für Schutzvisiere, Sonnenbrillen, Fensterfolien etc. sehr einfach miteinander kombiniert werden, ohne dass es an den Verklebungsflächen zu Lichtbrechungseffekten, Beugungserscheinungen oder optisch störenden Inhomogenitäten durch Toleranzwertaddition kommt. Der Haze-Wert der hergestellten Folienverbundprodukte kann deutlich geringer gehalten werden als bei der Kombination unterschiedlich funktionaler Folienlagen. Durch die Reduzierung der erforderlichen Additiveinsatzmengen aufgrund der synergistischen Wirkung der Einzeladditive ist eine Reduktion der Herstellungskosten und der Rohstoffeinsatzmengen möglich, was auch ökologisch aufgrund der Ressourcenschonung als Vorteil anzusehen ist. So können beispielsweise an Stelle einer üblicherweise eingesetzten Kombination aus einer 200 µm UV-400-Absorberfolie, einer 180 µm-Farbfolie und zwei Lagen einer NON-UV-80 µm-Schutzfolie mit einer Gesamtdicke von 540 µm auch eine Lage einer multifunktionalen 180 µm UV-Farbfolie, eine weitere Lage einer multifunktionalen 80 µm UV-Farbfolie und zwei Lagen einer multifunktionalen 80 µm-Farbfilterfolie mit einer reduzierten Gesamtdicke von 420 µm eingesetzt werden, ohne dass es zu Eigenschaftsbeeinträchtigungen kommt. Denkbar wäre auch die Reduzierung der Anzahl an Einzellagen von vier auf drei durch Einsatz von zwei Lagen einer jeweils 180µm dicken multifunktionalen UV-Farbfolie und einer Lage einer 180 µm multifunktionalen Non-UV-Farbfolie mit identischen Farbwerten. Die Gesamtdicke würde immer noch bei 540 µm liegen, wobei allerdings ein Verklebungsschritt aufgrund der Reduzierung der Einzellagenanzahl eingespart werden kann. Aufgrund der synergistischen Kombination der Einzelkomponenten sind multifunktionale Folien herstellbar, die bereits bei reduzierter Schichtdicke eine gute UV-Absorption bei gleichzeitiger Filtration störender Lichtbestandteile aufweisen und beispielsweise schon in der Einzellage in Kombination mit einer photochromen Funktion und einer IR-absorbierenden Funktion sehr gute Schutzfolien für Fenster, Türen, Autoscheiben, Sonnenbrillen, Skibrillen und Displays darstellen. Das Endprodukt kann dadurch eine geringere Gesamtdicke beziehungsweise ein geringeres Gewicht aufweisen.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigt:

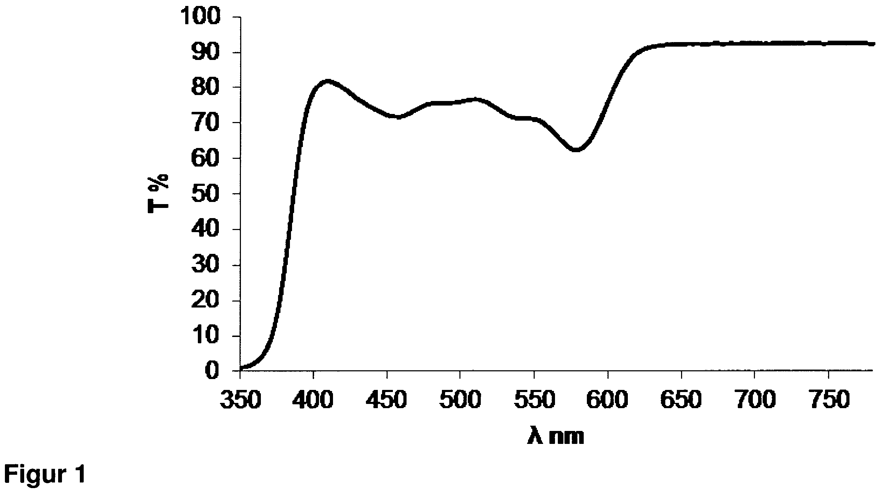

- **Figur 1:**: Transmissionsspektrum einer multifunktionalen Farbfolie mit UV-380nm- Filterfunktion und mehreren Absorptionsmaxima.

### Beispiel A:

### Multifunktionale Farbfolie mit UV-380nm Filterfunktion und mehreren

### Absorptionsmaxima

Eine Folie, bestehend aus einem Cellulosetriacetat mit möglichst niedrigem Haze-Wert <0,4 %, einem Weichmacher (Triphenylphosphat) in einer Konzentration von kleiner 9 %, bezogen auf den Feststoff und funktionalen Additiven, wird wie folgt hergestellt:
- Lösen des Feststoffes in einem Lösungsmittelgemisch aus 93 % Dichlormethan und 7 % Methanol und Rühren über mindestens 12 Stunden zum Erreichen eines möglichst hohen Homogenisierungsgrades;
- vierstufige Filtration der Lösung bis hin zu einer Filtermaschenweite von minimal 2,5 µm;
- sukzessives Einbringen der UV-Stabilisatoren, zum Beispiel 0,53 % Tinuvin 328, der funktionalen Farbstoffkomponenten, zum Beispiel 0,11 % (5(6)-Carboxyfluorescein von Sigma Aldrich und 0,055 % PTCDI der Firma Organica Feinchemie (D-06766 Bitterfeld- Wolfen), in die feinstfiltrierte Produktlösung, wobei zwischen den Zugabeschritten eine Homogenisierungsdauer von minimal 15 min liegen sollte,
- Zugabe der benötigten Weichmachermenge, zum Beispiel Triphenylphosphat, in diesem Fall von 8,53 % zur Lösung und Homogenisieren über weitere 4 Stunden;
- erneute mehrstufige Filtration der Lösung, anschließend Ultraschallentgasung und Ausbringen der Lösung auf ein umlaufendes Edelstahlband mit Hilfe eines Gießwerkzeugs und
- Trocknen der am Austritt der Gießmaschine erhaltenen, noch lösemittelfeuchten Folie in einem mehrstufigen Trockner bei einer Temperatur von maximal 150 °C bis zum Erreichen der geforderten Restlösemittelfeuchten und Aufwickeln.

Die so produzierten multifunktionalen Farbfolien mit einer UV-Filterwirkung bei einer Wellenlänge von 380 nm und mehreren Absorptionsmaxima verfügen über folgende Eigenschaften:
• Grundfarbton: pink-violette Einfärbung,
• Haze-Wert: < 0,5 %,
• Foliendicke: 80 µm (± 5 µm),
• Bruchfestigkeit: > 95 N/mm²,
• Dehnung: > 14 %,
• E-Modul: > 2.500 N/mm²,
• Temperaturbeständigkeit der Folie: bis 150 °C,
• Weichmachergehalt: 8 Massen-%,
• Transmissionswerte, siehe Tabelle 1:

**Tabelle 1**

| | **80 µm Farbfolie mit UV 380 nm-Filter Beispiel A** |
|---|---|
| **T380 %** | **28,8 %** |
| **T460 %** | **71,2%** |
| **T582 %** | **62,4 %** |
| **L*** | **88,533** |
| **a*** | **5,0** |
| **b*** | **- 0,9** |
| **T(lum) %** | **72,9 %** |

sowie
• Transmissionsspektrum, welches die Transmission in [%] bei einer spezifischen Wellenlänge in [nm] zeigt, siehe Figur 1.

### Beispiel B:

### Multifunktionale UV-Farbfolie mit photochromer Funktionalität

Eine Folie, bestehend aus einem Cellulosetriacetat mit möglichst niedrigem Haze-Wert, das heißt von ≤ 0,4 %, einem Weichmacher in Form von Triphenylphosphat in einer Konzentration von ≤ 12 %, bezogen auf den Feststoff, und funktionalen Additiven wird wie folgt schrittweise hergestellt:
- Lösen des Feststoffes in einem Lösungsmittelgemisch aus 95 % Dichlormethan und 5 % Methanol und Rühren über mindestens 12 Stunden zum Erreichen eines möglichst hohen Homogenisierungsgrades;
- vierstufige Filtration der Lösung bis hin zu einer Filtermaschenweite von 2,5 µm;
- sukzessives Einbringen der UV-Additive beziehungsweise -stabilisatoren, zum Beispiel Benzophenon und Tinuvin, der Farbstoffkomponenten, zum Beispiel Orasol ^{®} - Farbstoffe der Firma Kremer Pigmente, einschließlich eines photochromen Farbstoffes, zum Beispiel Reversacoal-Farbstoff der Firma James Robinson, in eine Methanolmenge, die 5 % der Gesamtlösemittelmenge entspricht, maximal bis zum Erreichen einer Konzentration, die 95 % der Gesamtsättigungskonzentration der Additive in der Lösung entspricht - gegebenenfalls auch unter Erwärmen der Lösung bis maximal 60 °C;
- Einrühren der Additivlösung in die Cellulosederivatlösung und Homogenisierung über ca. 4 Stunden;
- Zugabe der benötigten Weichmachermenge, zum Beispiel Triphenylphosphat, in diesem Fall von 12 % zur Lösung und Homogenisieren über weitere 4 Stunden;
- erneute mehrstufige Filtration der Lösung, anschließend Ultraschallentgasung und Ausbringen der Lösung auf ein umlaufendes Edelstahlband mit Hilfe eines Gießwerkzeugs und
- Trocknen der am Austritt der Gießmaschine erhaltenen, noch lösemittelfeuchten Folie in einem mehrstufigen Trockner bis zum Erreichen der geforderten Restlösemittelfeuchten bei einer Temperatur von maximal 150 °C und Aufwickeln.

Die so produzierten multifunktionalen photochromen Farbfolien mit UV-Schutz verfügen über folgende Eigenschaften:
• Grundfarbton: grau-blau,
• Haze-Wert: ≤ 0,3 %,
• Foliendicke: 180 µm ± 5pm,
• Bruchfestigkeit: ≥ 95 N/mm²,
• Dehnung: ≥ 14 %,
• Elastizitätsmodul: ≥ 2.500 N/mm²,
• Temperaturbeständigkeit der Folie: bis 150 °C,
• Weichmachergehalt: 12 Massen-% und
• Transmissionswerte, siehe Tabelle 2:

**Tabelle 2**

| | **180 µm photochrome Farbfolie mit UV-Schutz** | |
|---|---|---|
| | Inaktiv | Nach UV-Aktivierung |
| % T380 | ≤ 10% | ≤ 10% |
| % T490 | 18.3 | 12.1 |
| % T550 | 50.0 | 33.2 |
| % T584 | 15.7 | 9.0 |
| L* | 71.6 | 64.3 |
| a* | - 0.7 | 3.0 |
| b* | -7.4 | - 9.1 |
| t_{1/2} | | 51 s |
| t_{1/4} | | 158 s |

### Beispiel C:

### Multifunktionale Farbfolie mit UV-Schutz und Retinazapfenentlastungsfunktion

Eine Folie, bestehend aus einem Cellulosetriacetat mit möglichst niedrigem Haze-Wert ≤ 0,4%, einem Weichmacher (Triphenylphosphat) in einer Konzentration von ≤ 9 %, bezogen auf den Feststoff, und funktionalen Additiven wird wie folgt hergestellt:
- Lösen des Feststoffes in einem Lösungsmittelgemisch aus 93 % Dichlormethan und 7 % Methanol und Rühren über mindestens 12 Stunden zum Erreichen eines möglichst hohen Homogenisierungsgrades;
- vierstufige Filtration der Lösung bis hin zu einer Filtermaschenweite von minimal 2,5 µm;
- sukzessives Einbringen der UV-Stabilisatoren, zum Beispiel Tinuvin 770 und Tinuvin 328, und anschließend der funktionalen Farbstoffkomponenten aus der Gruppe der Metallkomplexfarbstoffe (zum Beispiel Orasol ^{®} - Farbstoffe der Firma Kremer Pigmente (D-88317 Aichstetten), der Gruppe der Lumineszenzfarbstoffe (zum Beispiel (5(6)-Carboxyfluorescein der Firma Sigma Aldrich Laborchemikalien GmbH, D-30926 Seelze) und der Gruppe der Perylenfarbstoffe (zum Beispiel PTCDI der Firma Organica Feinchemie D-06766 Bitterfeld- Wolfen) in die feinstfiltrierte Produktlösung, wobei zwischen den Zugabeschritten eine Homogenisierungsdauer von minimal 15 min liegen sollte;
- Zugabe der benötigten Weichmachermenge, zum Beispiel Triphenylphosphat, in diesem Fall von 8,5 %, zur Lösung und Homogenisieren über weitere 4 Stunden;
- erneute mehrstufige Filtration der Lösung, anschließend Ultraschallentgasung und Ausbringen der Lösung auf ein umlaufendes Edelstahlband mit Hilfe eines Gießwerkzeugs und
- Trocknen der am Austritt der Gießmaschine erhaltenen, noch lösemittelfeuchten Folie in einem mehrstufigen Trockner bis zum Erreichen der geforderten Restlösemittelfeuchten bei einer Temperatur von maximal 150 °C und Aufwickeln.

Die so produzierten multifunktionalen Farbfolien mit UV-Schutz und Retinazapfenentlastungsfunktion verfügen über folgende Eigenschaften:
• Grundfarbton: dunkelgrau mit geringfügig pink-violetter Einfärbung,
• Haze-Wert: ≤ 0,5%,
• Foliendicke: 160 µm (± 5µm),
• Bruchfestigkeit: ≥ 95 N/mm²,
• Dehnung: ≥ 14 %,
• Elastizitätsmodul: ≥ 2.500 N/mm²,
• Temperaturbeständigkeit der Folie: bis 150 °C,
• Weichmachergehalt: 8 Massen-% und
• Transmissionswerte, siehe Tabelle 3:

**Tabelle 3**

| | **160 µm Farbfolie mit UV-Filter Beispiel C** |
|---|---|
| T380 % | ≤ 1 % |
| T490 % | 6,0 % |
| T580 % | 3,4 % |
| L* | 48,95 |
| a* | 4,35 |
| b* | - 0,75 |
| T(lum) % | 17,5 % |

## Patentansprüche

1. Multifunktionale optisch hochtransparente Folien auf der Basis von Celluloseestern, die folgende Komponenten innerhalb einer Folie beinhalten:
a) einen Celluloseester oder ein Gemisch aus Celluloseestern auf der Basis von Cellulosetriacetat, welcher/welches durch folgende Eigenschaften definiert ist:
• als Rohstoffbasis Baumwoll-Linters,
• einen Anteil von ≤ 300 ppm an doppelbrechenden Partikeln mit einer Größe von ≤ 20 µm, bestimmt durch die Methode der Filtration über verschiedene Filter mit jeweils definierter Porenweite,
• einen Wasseranteil von ≤ 1 %,
• einen Anteil freier Essigsäure von ≤ 300 ppm,
• einen Anteil von gelbildenden Komponenten von ≤ 0,5 %,
• eine sehr geringe Gelbfärbung, charakterisiert durch eine niedrige Hazen-Farbzahl (APHA-Wert) ≤ 70 bestimmt an einer 16%igen Lösung von Cellulosetriacetat, gelöst in Methylenchlorid nach der Methode ASTM D-1209,
• einen Anteil von ≤ 0,5 % an Fremdfasern und über- oder unterderivatisierten Partikeln mit einer Größe von ≤ 40 µm, bestimmt durch die Methode der Filtration über verschiedene Filter mit jeweils definierter Porenweite, und
• einen Haze-Wert von ≤ 0,4 %, bestimmt durch Methode ASTM D 1003, D 1044, des zu einer Folie ausgezogenen, zuvor in Dichlormethan oder Aceton gelösten und unfiltrierten Cellulosederivats, wobei dieser Haze-Wert einer hochtransparenten Folie aufgrund einer hohen Reinheit und optischen Qualität des zur Folie verarbeiteten Celluloseesters oder Gemischs aus Celluloseestern entspricht;
b) mindestens einen organischen oder anorganischen Stoff, der als Weichmacher und als Abstandshalter zwischen den Molekülketten des Celluloseesters wirksam ist und dadurch eine optimale Entfernung der in der Folie enthaltenen Restlösungsmittel während des Folientrocknungsprozesses und synergistisch wirksam eine verbesserte Einlagerung und Funktionalität zusätzlich eingebrachter Additive ermöglicht,
c) mindestens drei organische oder anorganische Stoffe mit einer transmissionsbeeinflussenden absorptiven Funktion im Wellenlängenbereich von 300 nm bis 2500 nm, die zugleich auch synergistisch als Weichmacheräquivalent im Sinne eines Abstandshalters zwischen den Molekülketten der Celluloseestermatrix wirksam sind und eine Schutz- und Entlastungsfunktion für die Retina des menschlichen Auges besitzen, wobei sich diese Funktion primär auf die Reduzierung der auf das Auge einwirkenden Energieleistungsdichte in physiologisch relevanten Wellenlängenbereichen bezieht, charakterisiert durch eine Reduzierung der Transmission des durch die Folie hindurchgehenden Lichtes
wobei die multifunktionale optisch hochtransparente Folie erhältlich ist durch ein Verfahren zu deren Herstellung, bei dem der Celluloseester oder das Gemisch aus Celluloseestern gemäß a) als Ausgangsmaterial vorliegt und eine Zugabe der Komponenten b) und c) als Additive erfolgt, wobei das nach a) verwendete Celluloseestermaterial zuvor in mindestens einem Lösungsmittel aus der Gruppe der halogenorganischen Lösemittel, der alkoholischen Lösemittel, der Carbonsäureester, der aromatischen Lösemittel, der Ether oder der Ketone weitestgehend gelöst, homogenisiert und vor Zugabe der in b) und c) genannten Komponenten in einem mehrstufigem Filtrationsprozess von Fremdpartikeln, Gelteilchen, Fasern und ungelösten Rohstoffkomponenten befreit wurde und die als Weichmacher und/oder als synergistische Weichmacheräquivalente wirksamen Komponenten b) und c) erst nach der Filtration zur Produktlösung zugegeben und anschließend gemeinsam mit der Produktlösung homogenisiert werden, und wobei der Anteil der als Weichmacher wirksamen und der - bezogen auf die Molekülketten des Celluloseesters - als Abstandshalter wirksamen Komponenten insgesamt kleiner oder gleich 25 % und der Anteil der Weichmacherkomponenten entsprechend b) kleiner oder gleich 20 % ist.

2. Multifunktionale optisch hochtransparente Folien nach Anspruch 1, **dadurch gekennzeichnet, dass** die entsprechend b) als Weichmacherkomponente wirksamen Stoffe aus der Gruppe der Phosphorsäureester, Phthalsäureester, Carbonsäureester, Zitronensäureester, Fettsäureester, Glykole, Polyester und/oder Adipinsäureester ausgewählt sind.

3. Multifunktionale optisch hochtransparente Folien nach Anspruch 1 oder 2, **dadurch gekennzeichnet, dass** als synergistisch wirksame Komponenten entsprechend c) Stoffe mit folgenden Eigenschaften eingesetzt werden:
• UV-Licht absorbierende Stoffe,
• IR-Licht absorbierende Stoffe,
• visuelles Licht absorbierende Farbstoffe,
• Licht im Wellenlängenbereich von 300 nm bis 1.000 nm absorbierende oder reflektierende nanoskalige Stoffe mit einer mittleren Partikelgröße von ≤ 250 nm, bestimmt mit Röntgendiffraktometrie, die den Haze-Wert nur minimal, das heißt mit einem ΔHaze von ≤ 0,1, beeinflussen,
• photochrome Farbstoffe,
• thermochrome Farbstoffe,
• Lumineszenzfarbstoffe,
• antioxidativ als Stabilisierungsmittel wirksame, den Haze-Wert nicht beeinflussende transparente Stoffe und
• transparente Haftvermittler und Vernetzungsmittel.

4. Multifunktionale optisch hochtransparente Folien nach einem der Ansprüche 1 bis 3, **dadurch gekennzeichnet, dass** als synergistisch wirksame Komponenten entsprechend c) Stoffe eingesetzt werden, die zumindest in einem der nachfolgend aufgeführten Lösungsmittel entweder vollständig löslich oder stabil dispergierbar sind:
• Wasser,
• Eisessig,
• Methanol, Ethanol, Propanol, Butanol, Hexanol,
• Chloroform, Dichlormethan, Trichlormethan, Tetrachlormethan, Trichlorethan,
• Aceton, Methylethylketon,
• Dioxan, Tetrahydrofuran,
• Methoxypropanol, Ethoxypropanol,
• Benzol, Toluol, Xylol,
• Methylacetat, Ethylacetat, Propylacetat, Butylacetat,
• Dimethylsulfoxid und
• Acetonitril, n-Hexan, n-Heptan.

5. Multifunktionale optisch hochtransparente Folien nach einem der Ansprüche 1 bis 4, **dadurch gekennzeichnet, dass** als synergistisch wirksame Komponenten entsprechend c) ein organischer oder anorganischer Farbstoff oder Farbstoffe natürlichen oder synthetischen Ursprungs aus einer der nachfolgend aufgeführten Farbstoffklassen eingesetzt werden:
• nanoskalige Pigmentfarbstoffe,
• Metallkomplexfarbstoffe,
• Laserfarbstoffe,
• Lumineszenzfarbstoffe,
• photochrome Farbstoffe und thermochrome Farbstoffe,
• anthrachinonbasierte Farbstoffe,
• Cyaninfarbstoffe,
• Periononfarbstoffe sowie
• Azofarbstoffe.

6. Multifunktionale optisch hochtransparente Folien nach Anspruch 5, **dadurch gekennzeichnet, dass** die synergistisch wirksamen Einzelfarbstoffe der Komponente c) folgende Eigenschaften aufweisen:
• mindestens ein Transmissionsminimum im visuell sichtbaren Wellenlängenbereich von 400 nm bis 780 nm mit einer Bandbreite von maximal 75 nm bei 95 % des Transmissionsminimalwertes,
• ein Molekulargewicht von ≥ 200 g/mol,
• eine hohe Langzeitstabilität der Transmissionseigenschaften im Endprodukt, das heißt die Abweichung der Transmissions- und Farbwerte von den Ausgangswerten darf maximal 10 % betragen, wenn die Lagerung oder die Materialbeanspruchung unter folgenden Bedingungen erfolgt:
▪ einer relativen Luftfeuchte von 50 %,
▪ einer Temperatur von 80 °C,
▪ einer Lagerzeit von 500 Stunden,
• ein Siedepunkt oder Zersetzungspunkt: ≥ 105 °C und
• eine Transmission bei 380 nm von ≤ 80 %.

7. Multifunktionale optisch hochtransparente Folien nach einem der Ansprüche 1 bis 6, **dadurch gekennzeichnet, dass** als synergistisch wirksame Komponenten entsprechend c) organische oder anorganische Stoffe eingesetzt werden, die bei einer Wellenlänge von 380 nm eine Transmission von ≤ 10 % der durchschnittlichen Transmission im Wellenlängenbereich von 400 nm bis 780 nm aufweisen oder auch einer der nachfolgend aufgeführten Substanzklassen zugeordnet werden können:
• Benzophenone,
• Benzotriazole,
• Carbonsäureester,
• Triazine und/oder
• nanoskalige Metalloxide mit einer durchschnittlichen Partikelgröße ≤ 250 nm, bestimmt mit Röntgendiffraktometrie.

8. Multifunktionale optisch hochtransparente Folien nach einem der Ansprüche 1 bis 7, **dadurch gekennzeichnet, dass** als synergistisch wirksame Komponenten entsprechend c) organische oder anorganische Stoffe eingesetzt werden, die bei einer Wellenlänge von 800 nm ± 10 nm eine Transmission von ≤ 40 % der durchschnittlichen Transmission im Wellenlängenbereich von 400 nm bis 780 nm aufweisen und somit als IR-Absorber eingesetzt werden können.

9. Multifunktionale optisch hochtransparente Folien nach einem der Ansprüche 1 bis 8, **dadurch gekennzeichnet, dass** als synergistisch wirksame Komponenten entsprechend c) organische oder anorganische Stoffe eingesetzt werden, die nach der Einwirkung von Licht einer Wellenlänge (λ) ≤ 400 nm eine reversible Veränderung der Transmission im Bereich des sichtbaren Lichtes und eine Reduzierung der Transmission im Bereich des UV-Lichtes zeigen und somit eine Reduzierung der auf die Augen einwirkenden Strahlungsenergie im Bereich von 300 nm bis 780 nm bewirken, wobei die Folien folgendes Eigenschaftsprofil aufweisen:
• eine Foliendicke von 30 µm bis 300 µm,
• eine Temperaturbeständigkeit: stabil bis 150 °C ohne Zersetzung, Schmelzen oder irreversible Verformung,
• eine hohe Langzeitstabilität der optischen Eigenschaften, das heißt, das Niveau der Haze-Werte und der Transmissionswerte weicht maximal 10 % von den Ausgangswerten nach einer Lagerung über 500 Stunden bei 80 °C/50 % relative Feuchte ab,
• ein Weichmachergehalt von ≤ 20 Massen-%, wobei der Anteil an Triphenylphosphat den Wert von 16 Massen- % nicht übersteigt,
• einen Additivgehalt von ≤ 5 Massen-%,
• einen Haze-Wert von ≤ 0,5 %, bezogen auf 180 µm Foliendicke,
• eine Transmission vor der Einwirkung von Licht λ ≤ 400 nm:
∘ Transmission bei 550 nm: ≥ 50 %
• eine Transmission nach der Einwirkung von Licht λ ≤ 400 nm bei einer Einwirkzeit von 300 s:
| |
|---|
| ∘ Transmission bei 380 nm: ≤ 30 % |
| ∘ Transmission bei 400 nm: ≤ 50 % |
| ∘ Transmission bei 550 nm: ≤ 50 % |

10. Multifunktionale optisch hochtransparente Folien nach einem der Ansprüche 1 bis 9, **dadurch gekennzeichnet, dass** zusätzlich zu den synergistisch wirksamen Komponenten entsprechend c) zur Verbesserung der Langzeit- und Temperaturstabilität Stabilisierungsmittel, wie Antioxidantien oder HALS-Verbindungen (Hindered Amine Light Stabilizers) eingesetzt werden.

11. Multifunktionale optisch hochtransparente Folien nach einem der Ansprüche 1 bis 10, **dadurch gekennzeichnet, dass** die Komponenten a) bis c) derart kombiniert sind, dass bereits in einer Einzellage eine Multifunktionalität erreicht ist, die durch folgendes Eingenschaftsprofil definiert ist:
• eine Foliendicke von 30 µm bis 300 µm,
• eine Temperaturbeständigkeit mit einer Stabilität bis 150 °C ohne Zersetzung, Schmelzen oder irreversible Verformung,
• eine hohe Langzeitstabilität der optischen Eigenschaften, das heißt, das Niveau der Haze-Werte und der Transmissionswerte weicht maximal 10 % von den Ausgangswerten nach einer Lagerung über 500 Stunden bei 80 °C/50 % relativer Feuchte ab,
• einen Weichmachergehalt von ≤ 13 Massen-%,
• einen Additivgehalt von ≤ 5 Massen-%,
• einen Haze-Wert von ≤ 0,5 %, bezogen auf 180 µm Foliendicke,
• eine Transmission bei 400 nm von ≤ 50 % und
• Farbwerte gemäß CIE-Lab 1976; 10°; D 65 :
| |
|---|
| ∘ L: 30 bis 80, |
| ∘ a: - 100 bis + 100, |
| ∘ b: - 150 bis + 150. |

12. Multifunktionale optisch hochtransparente Folien nach Anspruch 11, **dadurch gekennzeichnet, dass** die Komponenten a) bis c) derart kombiniert werden, dass ein verbesserter Schutz der Netzhaut und eine hohe Entlastung des Auges durch Absorption von Lichtanteilen bei einer Wellenlänge von 580 nm und/oder 490 nm und/oder 435 nm erfolgen kann, wobei die Folien folgendes Eigenschaftsprofil aufweisen:
• eine Foliendicke von 70 µm bis 270 µm,
• eine Temperaturbeständigkeit mit einer Stabilität bis 150 °C, ohne Zersetzung, Schmelzen oder irreversible Verformung,
• eine hohe Langzeitstabilität der optischen Eigenschaften bei 500 Stunden bei 80 °C/50 % relativer Feuchte,
• einen Weichmachergehalt von ≤ 13 Massen-%,
• einen Additivgehalt von < 5 Massen-%,
• einen Haze-Wert von ≤ 0,7 %, bezogen auf 180µm Foliendicke,
• eine Transmission bei 400 nm von < 50 %,
• eine Transmission bei 435 nm von ≤ 70 % des Transmissionswertes, der bei einer Wellenlänge von 450 nm gemessen wird,
• eine Transmission bei 490 nm von ≤ 70 % des Transmissionswertes, der bei einer Wellenlänge von 525 nm gemessen wird,
• eine Transmission bei 580 nm von ≤ 70 % des Transmissionswertes, der bei einer Wellenlänge von 550 nm gemessen wird,
• eine Transmission bei 650 nm von ≥ 20 %.

13. Verfahren zur Herstellung einer multifunktionalen optisch hochtransparenten Folie nach einem der Ansprüche 1 bis 12, bei dem der Celluloseester oder das Gemisch aus Celluloseestern gemäß a) als Ausgangsmaterial vorliegt und eine Zugabe der Komponenten b) und c) als Additive erfolgt, wobei das nach a) verwendete Celluloseestermaterial zuvor in mindestens einem Lösungsmittel aus der Gruppe der halogenorganischen Lösemittel, der alkoholischen Lösemittel, der Carbonsäureester, der aromatischen Lösemittel, der Ether oder der Ketone weitestgehend gelöst, homogenisiert und vor Zugabe der in b) und c) genannten Komponenten in einem mehrstufigem Filtrationsprozess von Fremdpartikeln, Gelteilchen, Fasern und ungelösten Rohstoffkomponenten befreit wurde, und wobei die als Weichmacher und/oder als synergistische Weichmacheräquivalente wirksamen Komponenten b) und c) erst nach der Filtration zur Produktlösung zugegeben und anschließend gemeinsam mit der Produktlösung homogenisiert werden, und wobei der Anteil der als Weichmacher wirksamen und der - bezogen auf die Molekülketten des Celluloseesters - als Abstandshalter wirksamen Komponenten insgesamt kleiner oder gleich 25 % und der Anteil der Weichmacherkomponenten entsprechend b) kleiner oder gleich 20 % ist.

## Claims

1. Multifunctional high-optical-transparency foils based on cellulose esters, which comprise the following components within a foil:
a) a cellulose ester or a mixture of cellulose esters based on cellulose triacetate, where the said cellulose ester or the said mixture is defined by the following properties:
• cotton linters as raw-material basis,
• a proportion of ≤ 300 ppm of birefringent particles with a size of ≤ 20 pm, determined by the method of filtration by way of various filters with respectively defined pore width,
• a water content of ≤ 1%,
• a proportion of free acetic acid of ≤ 300 ppm,
• a proportion of gel-forming components of ≤ 0.5%,
• very little yellowing, **characterized by** a low Hazen colour number (APHA value) ≤ 70, determined on a 16% solution of cellulose triacetate, dissolved in methylene chloride by the method of ASTM D1209,
• a proportion of ≤ 0.5% of foreign fibres and of over- or under-derivatized particles with a size of ≤ 40 pm, determined by the method of filtration by way of various filters with respectively defined pore width, and
• a haze value of ≤ 0.4%, determined by the method of ASTM D1003, D1044, of the cellulose derivative drawn to give a foil after solution in dichloromethane or acetone without filtering, where this haze value corresponds to a high-transparency foil by virtue of high purity and optical quality of the cellulose ester or mixture of cellulose esters processed to give the foil;
b) at least one organic or inorganic substance which acts as plasticizer and as spacer between the molecular chains of the cellulose ester and thus permits optimal removal of the residual solvents present in the foil during the foil-drying process and, acting synergistically, permits improved incorporation and functionality of additionally introduced additives,
c) at least three organic or inorganic substances with a transmittance-influencing absorptive function in the wavelength range of 300 nm to 2500 nm which at the same time also act synergistically as plasticizer equivalent in the sense of a spacer between the molecular chains of the cellulose ester matrix and have a protective and stress-reducing function for the retina of the human eye, where this function relates primarily to reduction of the energy density to which the eye is exposed in physiologically relevant wavelength ranges, **characterized by** a reduction of the transmittance of the light passing through the foil,
wherein the multifunctional high-optical-transparency foil is obtainable via a process for production thereof where the cellulose ester or the mixture of cellulose esters according to a) is present as starting material and the components b) and c) are added as additives, where the cellulose ester material used according to a) has been previously very substantially dissolved in at least one solvent from the group of the halogenated organic solvents, the alcoholic solvents, the carboxylic esters, the aromatic solvents, the ethers or the ketones, and homogenized and, before addition of the components specified in b) and c), has been freed from foreign particles, gel particles, fibres and undissolved raw-material components in a multistage filtration process, and the components b) and c) acting as plasticizers and/or as synergistic plasticizer equivalents are added to the product solution only after the filtration procedure and are then homogenized together with the product solution, and where the total proportion of the components acting as plasticizer and of the components acting as spacer - in relation to the molecular chains of the cellulose ester - is less than or equal to 25% and the proportion of the plasticizer components corresponding to b) is less than or equal to 20%.

2. Multifunctional high-optical-transparency foils according to Claim 1, **characterized in that** the substances that, corresponding to b), act as plasticizer component are selected from the group of the phosphoric esters, phthalic esters, carboxylic esters, citric esters, fatty acid esters, glycols, polyesters and/or adipic esters.

3. Multifunctional high-optical-transparency foils according to Claim 1 or 2, **characterized in that** substances used as synergistically active components corresponding to c) are those with the following properties:
• UV-light-absorbing substances,
• IR-light-absorbing substances,
• visible-light-absorbing dyes,
• nanoscale substances which are reflective or absorbent with respect to light in the wavelength range of 300 nm to 1000 nm and have an average particle size of ≤ 250 nm, determined by X-ray diffractometry, which have only a minimal effect on the haze value, i.e. have a Δhaze of ≤ 0.1,
• photochromic dyes,
• thermochromic dyes,
• luminescent dyes,
• transparent substances which have antioxidative action as stabilizers and which do not influence the haze value, and
• transparent adhesion promoters and crosslinking agents.

4. Multifunctional high-optical-transparency foils according to any of Claims 1 to 3, **characterized in that** substances used as synergistically active components corresponding to c) are those that either are completely soluble in or can form a stable dispersion at least in one of the solvents listed below:
• water,
• glacial acetic acid,
• methanol, ethanol, propanol, butanol, hexanol,
• chloroform, dichloromethane, trichloromethane, tetrachloromethane, trichloroethane,
• acetone, methyl ethyl ketone,
• dioxane, tetrahydrofuran,
• methoxypropanol, ethoxypropanol,
• benzene, toluene, xylene,
• methyl acetate, ethyl acetate, propyl acetate, butyl acetate,
• dimethyl sulfoxide and
• acetonitrile, n-hexane, n-heptane.

5. Multifunctional high-optical-transparency foils according to any of Claims 1 to 4, **characterized in that** synergistically active components corresponding to c) used are an organic or inorganic dye or dyes of natural or synthetic origin from one of the dye classes listed below:
• nanoscale pigment dyes,
• metal complex dyes,
• laser dyes,
• luminescent dyes,
• photochromic dyes and thermochromic dyes,
• anthraquinone-based dyes,
• cyanine dyes,
• perinone dyes and
• azo dyes.

6. Multifunctional high-optical-transparency foils according to Claim 5, **characterized in that** the synergistically active individual dyes of component c) have the following properties:
• at least one transmittance minimum in the visible wavelength range of 400 nm to 780 nm with a bandwidth of at most 75 nm at 95% of the minimal transmittance value,
• a molar mass of ≥ 200 g/mol,
• high long-term stability of the transmittance properties in the final product, i.e. the deviation of the transmittance values and colour coordinates from the initial values is permitted to be maximally 10% when the conditions of storage or for stressing of the material are as follows:
▪ a relative humidity of 50%,
▪ a temperature of 80°C,
▪ a storage time of 500 hours,
• a boiling point or decomposition point: ≥ 105°C and
• a transmittance at 380 nm of ≤ 80%.

7. Multifunctional high-optical-transparency foils according to any of Claims 1 to 6, **characterized in that** substances used as synergistically active components corresponding to c) are organic or inorganic substances which at a wavelength of 380 nm have a transmittance of ≤ 10% of the average transmittance in the wavelength range of 400 nm to 780 nm or else can be classified in one of the substance classes listed below:
• benzophenones,
• benzotriazoles,
• carboxylic esters,
• triazines and/or
• nanoscale metal oxides with an average particle size ≤ 250 nm, determined by X-ray diffractometry.

8. Multifunctional high-optical-transparency foils according to any of Claims 1 to 7, **characterized in that** substances used as synergistically active components corresponding to c) are organic or inorganic substances which at a wavelength of 800 nm ± 10 nm have a transmittance of ≤ 40% of the average transmittance in the wavelength range of 400 nm to 780 nm and which can therefore be used as IR-absorbers.

9. Multifunctional high-optical-transparency foils according to any of Claims 1 to 8, **characterized in that** substances used as synergistically active components corresponding to c) are organic or inorganic substances which after exposure to light of a wavelength (λ) ≤ 400 nm exhibit a reversible change of transmittance in the range of visible light and a reduction of transmittance in the range of UV light and which therefore bring about a reduction of the radiation energy to which the eyes are exposed in the range of 300 nm to 780 nm, where the foils have the following property profile:
• a foil thickness of 30 µm to 300 µm,
• a heat resistance: stable up to 150°C without decomposition, melting or irreversible deformation,
• a high long-term stability of the optical properties, i.e. the level of the haze values and of the transmittance values deviates maximally 10% from the initial values after storage for 500 hours at 80°C/50% relative humidity,
• a plasticizer content of ≤ 20% by mass, where the proportion of triphenyl phosphate does not exceed the value of 16% by mass,
• an additive content of ≤ 5% by mass,
• a haze value of ≤ 0.5%, based on 180 µm foil thickness,
• a transmittance before exposure to light at λ ≤ 400 nm:
∘ transmittance at 550 nm: ≥ 50%
• a transmittance after exposure to light at λ ≤ 400 nm with an exposure time of 300 s:
∘ transmittance at 380 nm: ≤ 30%
∘ transmittance at 400 nm: ≤ 50%
∘ transmittance at 550 nm: ≤ 50%.

10. Multifunctional high-optical-transparency foils according to any of Claims 1 to 9, **characterized in that,** in addition to the synergistically active components corresponding to c), stabilizers, for example antioxidants or HALS compounds (hindered amine light stabilizers) are used to improve heat resistance and long-term stability.

11. Multifunctional high-optical-transparency foils according to any of Claims 1 to 10, **characterized in that** the components a) to c) are combined in a manner that achieves, in just a single layer, a multifunctionality defined by the following property profile:
• a foil thickness of 30 µm to 300 µm,
• a heat resistance with stability up to 150°C, without decomposition, melting or irreversible deformation,
• a high long-term stability of the optical properties, i.e. the level of the haze values and of the transmittance values deviates maximally 10% from the initial values after storage for 500 hours at 80°C/50% relative humidity,
• a plasticizer content of ≤ 13% by mass,
• an additive content of ≤ 5% by mass,
• a haze value of ≤ 0.5%, based on 180 µm foil thickness,
• a transmittance at 400 nm of ≤ 50% and
• colour coordinates according to CIE-Lab 1976; 10°; D65:
| |
|---|
| o L: 30 up to 80, |
| o a: -100 up to +100, |
| o b: -150 up to +150. |

12. Multifunctional high-optical-transparency foils according to Claim 11, **characterized in that** the components a) to c) are combined in a manner that can give improved protection of the retina and a large reduction of the stressing of the eye due to absorption of light components at a wavelength of 580 nm and/or 490 nm and/or 435 nm, where the foils have the following property profile:
• a foil thickness of 70 µm to 270 µm,
• a heat resistance with stability up to 150°C, without decomposition, melting or irreversible deformation,
• a high long-term stability of the optical properties on exposure for 500 hours at 80°C/50% relative humidity,
• a plasticizer content of ≤ 13% by mass,
• an additive content of < 5% by mass,
• a haze value of ≤ 0.7%, based on 180 µm foil thickness,
• a transmittance at 400 nm of < 50%,
• a transmittance at 435 nm of ≤ 70% of the transmittance value measured at a wavelength of 450 nm,
• a transmittance at 490 nm of ≤ 70% of the transmittance value measured at a wavelength of 525 nm,
• a transmittance at 580 nm of ≤ 70% of the transmittance value measured at a wavelength of 550 nm,
• a transmittance at 650 nm of ≥ 20%.

13. Process for the production of a multifunctional high-optical-transparency foil according to any of Claims 1 to 12, where the cellulose ester or the mixture of cellulose esters according to a) is present as starting material and the components b) and c) are added as additives, where the cellulose ester material used according to a) has been previously very substantially dissolved in at least one solvent from the group of the halogenated organic solvents, the alcoholic solvents, the carboxylic esters, the aromatic solvents, the ethers or the ketones, and homogenized and, before addition of the components specified in b) and c), has been freed from foreign particles, gel particles, fibres and undissolved raw-material components in a multistage filtration process, and the components b) and c) acting as plasticizers and/or as synergistic plasticizer equivalents are added to the product solution only after the filtration procedure and are then homogenized together with the product solution, and where the total proportion of the components acting as plasticizer and of the components acting as spacer - in relation to the molecular chains of the cellulose ester - is less than or equal to 25% and the proportion of the plasticizer components corresponding to b) is less than or equal to 20%.

## Revendications

1. Films multifonctionnels à haute transparence optique à base d'esters de cellulose, qui comportent les composants suivants à l'intérieur d'un film :
a) un ester de cellulose ou un mélange d'esters de cellulose à base de triacétate de cellulose, qui est défini par les propriétés suivantes :
• des linters de coton en tant que base de matière première,
• une teneur de ≤ 300 ppm en particules biréfringentes ayant une taille de ≤ 20 µm, déterminée par la méthode de la filtration sur différents filtres ayant chacun une largeur de pores définie,
• une teneur en eau de s 1 %,
• une teneur en acide acétique libre de ≤ 300 ppm,
• une teneur en composants gélifiants de ≤ 0,5 %,
• une très faible coloration jaune, **caractérisée par** une faible valeur de trouble Haze (valeur APHA) ≤ 70, déterminée sur une solution à 16 % de triacétate de cellulose, dissous dans du chlorure de méthylène selon la méthode ASTM D-1209,
• une teneur de s 0,5 % en fibres étrangères et particules sur- ou sous-dérivatisées ayant une taille de ≤ 40 µm, déterminée par la méthode de la filtration sur différents filtres ayant chacun une largeur de pores définie, et
• une valeur de Haze de s 0,4 %, déterminée par la méthode ASTM D 1003, D 1044, du dérivé de cellulose étendu en un film, préalablement dissous dans du dichlorométhane ou de l'acétone et non filtré, cette valeur de Haze correspondant à un film à haute transparence en raison d'une grande pureté et d'une grande qualité optique de l'ester de cellulose ou du mélange d'esters de cellulose transformé en le film ;
b) au moins une substance organique ou inorganique qui est active en tant que plastifiant et en tant qu'espaceur entre les chaînes moléculaires de l'ester de cellulose et permet ainsi une élimination optimale des solvants résiduels contenus dans le film pendant le processus de séchage du film et, active en synergie, une incorporation et une fonctionnalité améliorées d'additifs introduits additionnellement,
c) au moins trois substances organiques ou inorganiques ayant une fonction absorbante influant sur la transmission dans le domaine de longueurs d'onde de 300 nm à 2 500 nm, qui sont en même temps actives également en synergie en tant qu'équivalent de plastifiant dans le sens d'un espaceur entre les chaînes moléculaires de la matrice d'ester de cellulose et ont une fonction de protection et de soulagement pour la rétine de l'œil humain, cette fonction étant en relation en priorité avec la réduction de la densité de puissance énergétique agissant sur l'œil dans les domaines de longueurs d'onde physiologiquement pertinents, **caractérisés par** une réduction de la transmission de la lumière traversant le film,
le film multifonctionnel à haute transparence optique pouvant être obtenu par un procédé pour sa fabrication, dans lequel l'ester de cellulose ou le mélange d'esters de cellulose selon a) est présent en tant que produit de départ et a lieu une addition des composants b) et c) en tant qu'additifs, le matériau ester de cellulose utilisé selon a) ayant été d'abord dissous le plus complètement possible dans au moins un solvant choisi dans le groupe des solvants organiques halogénés, des solvants alcooliques, des esters d'acides carboxyliques, des solvants aromatiques, des éthers ou des cétones, homogénéisé et, avant l'addition des composants nommés en b) et c), libéré de particules étrangères, particules de gel, fibres er composants de matières premières non dissous, dans un processus de filtration à plusieurs stades et les composants b) et c) actifs en tant que plastifiants et/ou en tant qu'équivalents synergiques de plastifiants n'étant ajoutés à la solution de produit qu'après la filtration et étant ensuite homogénéisés conjointement avec la solution de produit, et la proportion des composants actifs en tant que plastifiants et des composants actifs en tant qu'espaceurs - sur la base des chaînes moléculaires de l'ester de cellulose - étant au total inférieure ou égale à 25 % et la proportion des composants plastifiants correspondant à b) étant inférieure ou égale à 20 %.

2. Films multifonctionnels à haute transparence optique selon la revendication 1, **caractérisés en ce que** les substances actives en tant que composants plastifiants correspondant à b) sont choisies dans le groupe des esters d'acide phosphorique, esters d'acide phtalique, esters d'acides carboxyliques, esters d'acide citrique, esters d'acides gras, glycols polyesters et/ou esters d'acide adipique.

3. Films multifonctionnels à haute transparence optique selon la revendication 1 ou 2, **caractérisés en ce qu'**on utilise en tant que composants actifs en synergie correspondant à c) des substances ayant les propriétés suivantes :
• substances absorbant la lumière UV,
• substances absorbant la lumière IR,
• substances absorbant la lumière visible,
• substances nanométriques absorbant ou réfléchissant la lumière dans la gamme de longueurs d'onde de 300 nm à 1 000 nm, ayant une taille moyenne de particule de s 250 nm, déterminée par diffractométrie aux rayons X, qui n'ont qu'un effet minime sur la valeur de Haze, à savoir avec un ΔHaze de ≤ 0,1,
• colorants photochromiques,
• colorants thermochromiques,
• colorants luminescents,
• substances à effet antioxydant actives en tant que stabilisants, transparentes, sans effet sur la valeur Haze et
• agents de réticulation et agents adhésifs transparents.

4. Films multifonctionnels à haute transparence optique selon l'une quelconque des revendications 1 à 3, **caractérisés en ce qu'**on utilise en tant que composants actifs en synergie correspondant à c) des substances qui sont soit totalement solubles, soit dispersables de façon stable au moins dans un des solvants indiqués ci-après :
• l'eau,
• l'acide acétique glacial,
• le méthanol, l'éthanol, le propanol, le butanol, l'hexanol,
• le chloroforme, le dichlorométhane, le trichlorométhane, le tétrachlorométhane, le trichloréthane,
• l'acétone, la méthyléthylcétone,
• le dioxane, le tétrahydrofurane,
• le méthoxypropanol, l'éthoxypropanol,
• le benzène, le toluène, le xylène,
• l'acétate de méthyle, l'acétate d'éthyle, l'acétate de propyle, l'acétate de butyle,
• le diméthylsulfoxyde et
• l'acétonitrile, le n-hexane, le n-heptane.

5. Films multifonctionnels à haute transparence optique selon l'une quelconque des revendications 1 à 4, **caractérisés en ce qu'**on utilise en tant que composants actifs en synergie correspondant à c) un colorant organique ou inorganique ou des colorants d'origine naturelle ou synthétique choisis dans l'une des classes de colorants indiquées ci-après :
• colorants pigmentaires nanométriques,
• colorants à complexe métallifères,
• colorants laser,
• colorants luminescents,
• colorants photochromiques et colorants thermochromiques,
• colorants à base d'anthraquinones,
• colorants cyanine,
• colorants périnone ainsi que
• colorants azoïques.

6. Films multifonctionnels à haute transparence optique selon la revendication 5, **caractérisés en ce que** les colorants individuels actifs en synergie du composant c) présentent les propriétés suivantes :
• au moins un minimum de transmission dans le domaine de longueurs d'onde visible visuellement de 400 nm à 780 nm avec une largeur de bande d'au maximum 75 nm à 95 % de la valeur minimale de la transmission,
• une masse moléculaire de ≥ 200 g/mole,
• une grande stabilité à long terme des propriétés de transmission dans le produit final, c'est-à-dire que l'écart des valeurs chromatiques et de la transmission par rapport aux valeurs initiales peut être au maximum de 10 %, lorsque le stockage ou la sollicitation des matériaux s'effectue dans les conditions suivantes :
• une humidité relative de l'air de 50 %
• une température de 80 °C,
• un temps de stockage de 500 heures,
• un point d'ébullition ou point de décomposition : ≥ 105 °C et
• une transmission à 380 nm de s 80 %.

7. Films multifonctionnels à haute transparence optique selon l'une quelconque des revendications 1 à 6, **caractérisés en ce qu'**on utilise en tant que composants actifs en synergie correspondant à c) des substances organiques ou inorganiques qui présentent à une longueur d'onde de 380 nm une transmission de ≤ 10 % de la transmission moyenne dans le domaine de longueurs d'onde de 400 nm à 780 nm ou peuvent être également affectées à l'une des classes de substances indiquées ci-après :
• benzophénones,
• benzotriazoles,
• esters d'acides carboxyliques,
• triazines et/ou
• oxydes métalliques nanométriques ayant une taille moyenne de particule s 250 nm, déterminée par diffractométrie aux rayons X.

8. Films multifonctionnels à haute transparence optique selon l'une quelconque des revendications 1 à 7, **caractérisés en ce qu'**on utilise en tant que composants actifs en synergie correspondant à c) des substances organiques ou inorganiques qui présentent à une longueur d'onde de 800 nm ± 10 nm une transmission de ≤ 40 % de la transmission moyenne dans le domaine de longueurs d'onde de 400 nm à 780 nm et peuvent donc être utilisées en tant qu'absorbeurs IR.

9. Films multifonctionnels à haute transparence optique selon l'une quelconque des revendications 1 à 8, **caractérisés en ce qu'**on utilise en tant que composants actifs en synergie correspondant à c) des substances organiques ou inorganiques qui présentent après l'action de la lumière d'une longueur d'onde (λ) ≤ 400 nm une modification réversible de la transmission dans le domaine de la lumière visible et une réduction de la transmission dans le domaine de la lumière UV et provoquent donc une réduction de l'énergie de rayonnement dans le domaine de 300 nm à 780 nm, agissant sur les yeux, le film présentant le profil de propriétés suivant :
• une épaisseur de film de 30 µm à 300 µm,
• une résistance à la température : stable jusqu'à 150 °C sans décomposition, fusion ni déformation irréversible,
• une grande stabilité à long terme des propriétés optiques, à savoir, le niveau des valeurs de Haze et des valeurs de la transmission diminue au maximum de 10 % des valeurs initiales après un stockage pendant 500 heures à 80 °C/50 % d'humidité relative,
• une teneur en plastifiants de s 20 % en masse, la teneur en phosphate de triphényle n'excédant pas la valeur de 16 % en masse,
• une teneur en additifs de ≤ 5 % en masse,
• une valeur Haze de ≤ 0,5 %, sur la base d'une épaisseur de film de 180 µm,
• une transmission avant l'action de lumière à λ ≤ 400 nm :
| | | |
|---|---|---|
| o | transmission à 550 | nm : 50 % |
• une transmission après l'action de lumière à λ ≤ 400 nm avec une durée d'action de 300 s :
| | | |
|---|---|---|
| ∘ | transmission à 380 nm | : ≤ 30 % |
| ∘ | transmission à 400 nm | : ≤ 50 % |
| ∘ | transmission à 550 nm | : ≤ 50 %. |

10. Films multifonctionnels à haute transparence optique selon l'une quelconque des revendications 1 à 9, **caractérisés en ce qu'**en plus des composants actifs en synergie correspondant à c) on utilise pour l'amélioration de la stabilité à long terme et de la stabilité vis-à-vis de la température des stabilisants, tels que des antioxydants ou des composés HALS (Hindered Amine Light Stabilizers).

11. Films multifonctionnels à haute transparence optique selon l'une quelconque des revendications 1 à 10, **caractérisés en ce que** les composants a) à c) sont associés de telle façon que déjà en une seule couche est atteinte une multifonctionnalité qui est définie par le profil de propriétés suivant :
• une épaisseur de film de 30 µm à 300 µm,
• une résistance à la température avec une stabilité jusqu'à 150 °C sans décomposition, fusion ni déformation irréversible,
• une grande stabilité à long terme des propriétés optiques, à savoir, le niveau des valeurs de Haze et des valeurs de la transmission diminue au maximum de 10 % des valeurs initiales après un stockage pendant 500 heures à 80 °C/50 % d'humidité relative,
• une teneur en plastifiants de ≤ 13 % en masse,
• une teneur en additifs de s 5 % en masse,
• une valeur Haze de ≤ 0,5 %, sur la base d'une épaisseur de film de 180 µm,
• une transmission à 400 nm de ≤ 50 % et
• des valeurs chromatiques selon CIE-Lab 1976 ; 10° ; D65 :
| | | |
|---|---|---|
| ∘ | L | : 30 à 80, |
| ∘ | a | : - 100 à + 100, |
| ∘ | b | : - 150 à + 150. |

12. Films multifonctionnels à haute transparence optique selon la revendication 11, **caractérisés en ce que** les composants a) à c) sont associés de telle façon qu'une protection améliorée de la rétine et un grand soulagement de l'œil peuvent avoir lieu par absorption de fractions de la lumière à une longueur d'onde de 580 nm et/ou 490 nm et/ou 435 nm, les films présentant le profil de propriétés suivant :
• une épaisseur de film de 70 µm à 270 µm,
• une résistance à la température avec une stabilité jusqu'à 150 °C, sans décomposition, fusion ni déformation irréversible,
• une grande stabilité à long terme des propriétés optiques après 500 heures à 80 °C/50 % d'humidité relative,
• une teneur en plastifiants de ≤ 13 % en masse,
• une teneur en additifs de ≤ 5 % en masse,
• une valeur Haze de ≤ 0,7 %, sur la base d'une épaisseur de film de 180 µm,
• une transmission à 400 nm de s 50 % et
• une transmission à 435 nm de ≤ 70 % de la valeur de la transmission qui est mesurée à une longueur d'onde de 450 nm,
• une transmission à 490 nm de s 70 % de la valeur de la transmission qui est mesurée à une longueur d'onde de 525 nm,
• une transmission à 580 nm de ≤ 70 % de la valeur de la transmission qui est mesurée à une longueur d'onde de 550 nm,
• une transmission à 650 nm de ≥ 20 %.

13. Procédé pour la fabrication d'un film multifonctionnel à haute transparence optique selon l'une quelconque des revendications 1 à 12, dans lequel l'ester de cellulose ou le mélange d'esters de cellulose selon a) est présent en tant que produit de départ et a lieu une addition des composants b) et c) en tant qu'additifs, le matériau ester de cellulose utilisé selon a) ayant été d'abord dissous le plus complètement possible dans au moins un solvant choisi dans le groupe des solvants organiques halogénés, des solvants alcooliques, des esters d'acides carboxyliques, des solvants aromatiques, des éthers ou des cétones, homogénéisé et, avant l'addition des composants nommés en b) et c), libéré de particules étrangères, particules de gel, fibres et composants de matières premières non dissous, dans un processus de filtration à plusieurs stades, et les composants b) et c) actifs en tant que plastifiants et/ou en tant qu'équivalents synergiques de plastifiants n'étant ajoutés à la solution de produit qu'après la filtration et étant ensuite homogénéisés conjointement avec la solution de produit, et la proportion des composants actifs en tant que plastifiants et des composants actifs en tant qu'espaceurs - sur la base des chaînes moléculaires de l'ester de cellulose - étant au total inférieure ou égale à 25 % et la proportion des composants plastifiants correspondant à b) étant inférieure ou égale à 20 %.
